# EUROPEAN PATENT APPLICATION

(11) **EP 4 274 305 A1**
(43) Date of publication of application: **08.11.2023**
(21) Application number: 22171996.6
(22) Date of filing: 06.05.2022
(51) Int. Cl.: H04W 36/38, H04W 36/08, H04W 36/22

(54) **SERVICE REQUEST HANDLING WITH NON-HOMOGENEOUS NETWORK SLICE SUPPORT**

(71) Applicant: Nokia Technologies Oy, 02610 Espoo (FI)
(72) Inventor: Gürsu, Halit Murat, 81371 Munich (DE); Godin, Philippe, 78000 Versailles (FR); Casati, Alessio, West Molesey, KT8 1NT (GB); Bulakci, Ömer, 80997 Munich (DE); Naseer-Ul-Islam, Muhammad, 81737 Munich (DE); Awada, Ahmad, 81249 Munich (DE); Elmali, Ugur Baran, 80639 Munich (DE)
(74) Representative: TBK

(57) **Abstract**

There are provided measures for enabling/realizing proper handling of a service request with non-homogeneous network slice support in a registration area in/for a mobile communication system. When a user equipment is served in a serving cell which is associated with a first tracking area not supporting all network slices allowed for the user equipment, a communication control entity can send, to an access and/or mobility management entity, a service request relating to at least one first network slice among the network slices allowed for the user equipment, which is not supported in the first tracking area, the access and/or mobility management entity can detect that the communication control entity is associated with the first tracking area in which the first network slice is not supported, and send, to the communication control entity, an indication of transitionary acceptance of activation of a session associated with the first network slice on condition of handover for the session to a tracking area supporting the first network slice, and the communication control entity can trigger handover of the user equipment element or function to a target cell belonging to a second tracking area supporting the first network slice.

## Description

### Field

The present disclosure relates to service request handling with non-homogeneous network slice support in/for a mobile communication system. More specifically, the present disclosure relates to measures/mechanisms (including methods, apparatuses (i.e. devices, entities, elements, instances and/or functions) and computer program products) for enabling/realizing proper handling of a service request with non-homogeneous network slice support in a registration area in/for a mobile communication system.

### Background

The present disclosure basically relates to network slice support and service request handling in a mobile communication system, e.g. a 3GPP-standardized mobile/wireless communication system, such as a 5G/NR system and a next-generation system beyond 5G.

In 5G/NR systems, network slicing is a key feature to support different services using the same underlying network infrastructure. Network slices can differ either in their service requirements or the tenant providing those services such as e.g. Ultra-Reliable Low Latency Communication (URLLC) and enhanced Mobile Broadband (eMBB).

A network slice is uniquely identified via the S-NSSAI (Single Network Slice Selection Assistance Information). Current 3GPP specifications allow a UE to be simultaneously connected to and served by at most eight S-NSSAIs, while each cell may support tens or even hundreds of S-NSSAIs such that, for example, a tracking area can support up to 1024 network slices.

In the handling/control of a UE, a registration area (RA) is a list consisting of tracking areas (TAs) which is configured to the UE by the network.

On the one hand, the registration area is used to track the UE for paging purposes. If the UE leaves the RA, the UE would let the network know through a NAS registration request such that the correct RA can be (re-) configured to the UE.

On the other hand, in 5G/NR systems, the registration area is used to maintain allowed network slices (or, alternatively, allowed NSSAI) of the UE. The allowed network slices (S-NSSAIs) are or the allowed NSSAI is configured to the UE by the network. Herein, an allowed S-NSSAI can refer to an S-NSSAI included in the allowed NSSAI. The UE can request access to an S-NSSAI by a NAS registration request and the network would decide whether or not to add that S-NSSAI to the UE's list of allowed S-NSSAIs or the UE's allowed NSSAI.

In current 3GPP specifications, homogenous network slice support in a registration area is assumed. This means that the same network slices are to be supported in all tracking areas throughout a registration area.

However, for future 5G/NR systems and next-generation systems beyond 5G, non-homogenous network slice support in a registration area is expected to be feasible. Namely, it is expected that a registration area can comprise tracking areas supporting different network slices such that a tracking area in the registration area of a UE may not support all allowed network slices of the UE. This allows a more flexible registration area configuration, whereas such relaxation has a fundamental trade-off with service request handling, such as e.g. in UE paging or in UE transition from (RRC) idle mode to (RRC) connected mode.

In the following, this issue of non-homogenous network slice support in a registration area is exemplarily described with regard to paging.

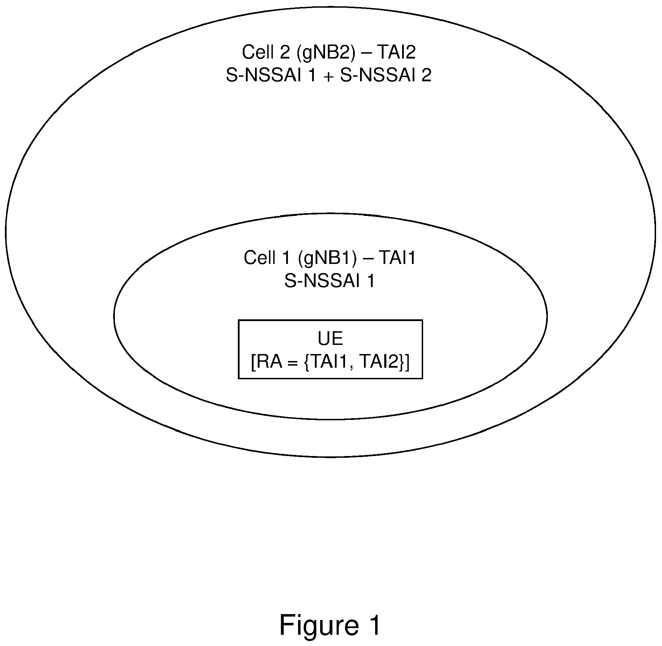

Figure 1 shows a schematic diagram of an example of a registration area scenario. More specifically, Figure 1 illustrates an example scenario where a UE is configured with the registration area (RA) that comprises TA1 and TA2, and the UE has allowed network slices S-NSSAI 1 and S-NSSAI 2. A Cell 1 being controlled by gNB1 belongs to a tracking area 1 (TAI1) supporting the network slice S-NSSAI 1, and a Cell 2 being controlled by gNB1 belongs to a tracking area 2 (TAI2) supporting the network slices S-NSSAI 1 and S-NSSAI 2. It is assumed that the UE is camping in, i.e. served by Cell 1.

When the UE is being paged for a PDU session of S-NSSAI 2, the network. e.g. AMF, sends a paging message to Cell 2 and other cells of TAI2. The network, e.g. AMF, may decide to never send the paging message to any cell under TAI1, as no cell of TAI1 supports the requested PDU session of S-NSSAI 2 for the UE.

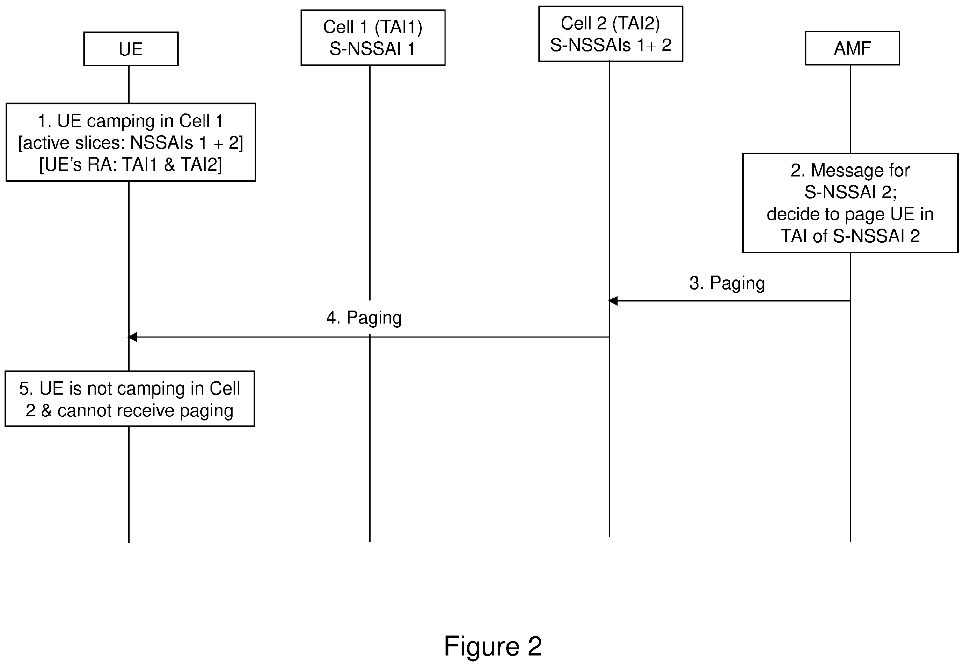

Figure 2 shows a flowchart illustrating an example of a paging procedure for the scenario of Figure 1, as outlined above.

The exemplary paging procedure of Figure 2 is as follows.
1) UE is camping in Cell 1 with active network slices S-NSSAI 1 and S-NSSAI 2. UE's RA is configured to be TAI1 and TAI2.
2) AMF received, e.g. from SMF, a message for MT data, i.e. a PDU session, associated with network slice S-NSSAI 2 and thus needs to page UE for the requested PDU session associated with network slice S-NSSAI 2. AMF decides to page UE in Cell 2 belonging to TAI2 as a supporting tracking area.
3) AMF sends a paging message to gNB2 controlling Cell 2 belonging to TAI2 as Cell 2 is the only cell supporting network slice S-NSSAI 2 in the RA of UE.
4) gNB2 sends the paging message to UE.
5) As UE is camping in Cell 1 but not in Cell 2, UE cannot receive the paging message from gNB2.

Such procedure may be the expected behavior if cell coverages (of Cells 1 and 2 in the above example) are not overlapping. Yet, if cell coverages (of Cells 1 and 2 in the above example) are overlapping, such procedure is an improper or suboptimal behavior, since the UE is under coverage of both cells (including Cell 2 in the above example). However, despite being covered by Cell 2, the UE can still not receive the paging message from Cell 2 as it does not monitor paging occasions from Cell 2 because of camping in Cell 1.

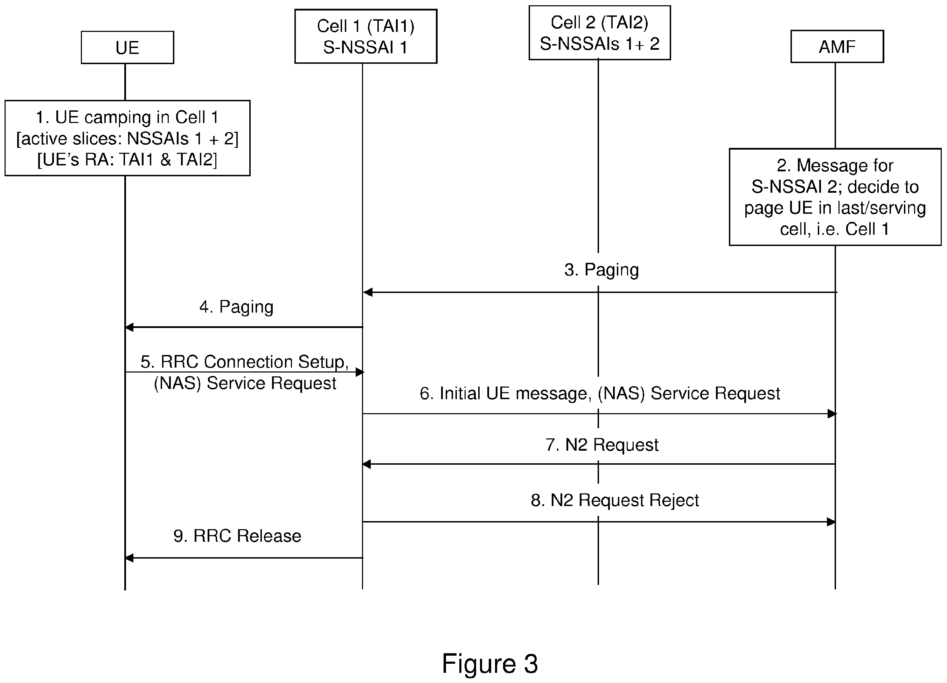

Figure 3 shows a flowchart illustrating an example of a paging procedure for the scenario of Figure 1, wherein AMF does not page a cell of a tracking area supporting the relevant network slice but the last/serving cell, which is a cell of a tracking area not supporting the relevant network slice.

The exemplary paging procedure of Figure 3 is as follows.
1) UE is camping in Cell 1 with active network slices S-NSSAI 1 and S-NSSAI 2. UE's RA is configured to be TAI1 and TAI2.
2) AMF received, e.g. from SMF, a message for MT data, i.e. a PDU session, associated with network slice S-NSSAI 2 and thus needs to page UE for the requested PDU session associated with network slice S-NSSAI 2. AMF decides to page UE in Cell 1 as the last/serving cell of UE.
3) AMF sends a paging message to gNB1 controlling Cell 1 belonging to TAI1 as Cell 1 is the last/serving which reported a location of UE .
4) gNB1 sends the paging message to UE.
5) As UE is camping in Cell 1, UE receives the paging message from gNB1. UE sends a service request, e.g. in an RRC Connection setup message, to gNB1.
6) gNB1 sends the service request, e.g. in an Initial UE message, to AMF.
7) At this point, either the request is rejected by the AMF or (as illustrated) AMF sends e.g. an N2 Request message to gNB1.
8) gNB1 declares, e.g. in an N2 Request Reject message, that it cannot establish the requested PDU Session associated with network slice S-NSSAI 2, as its Cell 1 belongs to TAI1 not supporting network slice S-NSSAI 2 in the RA of UE.
9) UE is released, e.g. by an RRC Release message from gNB1, as it cannot initiate the requested PDU session associated with network slice S-NSSAI 2.

Such procedure is an improper or suboptimal behavior, irrespective of whether cell coverages (of Cells 1 and 2 in the above example) are non-/ overlapping.

Therefore, there is room for improvement and a desire/need for a technique for (enabling/realizing) proper handling of a service request with non-homogeneous network slice support in a registration area in/for a mobile communication system.

### Summary

Various exemplifying embodiments of the present disclosure aim at addressing at least part of the above issues and/or problems and drawbacks.

Various aspects of exemplifying embodiments of the present disclosure are set out in the appended claims.

According to an example aspect of the present disclosure, there is provided an apparatus of (or, stated in other words, operable or for use in/by) a communication control element or function in/for a mobile communication system, comprising: means for sending, to an access and/or mobility management element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, said first network slice being not supported in the first tracking area, means for obtaining, from the access and/or mobility management element or function, an indication of transitionary acceptance of activation of a session associated with the first network slice on condition of handover for the session to a tracking area supporting the first network slice, and means for triggering handover of the user equipment element or function to a target cell belonging to a second tracking area supporting the first network slice.

According to an example aspect of the present disclosure, there is provided an apparatus of (or, stated in other words, operable or for use in/by) a communication control element or function in/for a mobile communication system, the apparatus comprising at least one processor and at least one memory including computer program code, wherein the processor, with the at least one memory and the computer program code, is configured to cause the apparatus to perform: sending, to an access and/or mobility management element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, said first network slice being not supported in the first tracking area, obtaining, from the access and/or mobility management element or function, an indication of transitionary acceptance of activation of a session associated with the first network slice on condition of handover for the session to a tracking area supporting the first network slice, and triggering handover of the user equipment element or function to a target cell belonging to a second tracking area supporting the first network slice.

According to an example aspect of the present disclosure, there is provided a method of (or, stated in other words, operable or for use in/by) a communication control element or function in/for a mobile communication system, comprising: sending, to an access and/or mobility management element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, said first network slice being not supported in the first tracking area, obtaining, from the access and/or mobility management element or function, an indication of transitionary acceptance of activation of a session associated with the first network slice on condition of handover for the session to a tracking area supporting the first network slice, and triggering handover of the user equipment element or function to a target cell belonging to a second tracking area supporting the first network slice.

According to various developments/modifications, any one of the aforementioned method-related and/or apparatus-related example aspects of the present disclosure may include one or more of the following features:
the functionality, operability or method comprises determining possibility of and/or performing the handover of the user equipment element or function from the serving cell to the target cell belonging to the second tracking area supporting the first network slice,
the functionality, operability or method comprises sending, to the access and/or mobility management element or function, an indication of a status or result of the handover for the session,
a status or result of the handover for the session is (indicated to be) either one of: pendency of the handover when the handover is not completed, failure of the handover when the handover has failed or is determined to be not feasible, or success of the handover when the handover has succeeded,
determining comprises or relates to identifying a suitable neighboring cell, which is a cell controlled by the communication control element or function or another communication control element or function, as the target cell for the handover of the user equipment element or function,
an indication of the status or result of the handover comprises an identification of the target cell and/or another communication control element or function controlling the target cell,
performing the handover of the user equipment element or function comprises sending, to the target cell and/or another communication control element or function controlling the target cell, an indication of transitionary acceptance of activation of a session associated with the first network slice on condition of handover for the session to a tracking area supporting the first network slice,
the functionality, operability or method comprises initiating radio resource reconfiguration at the user equipment element or function,
radio resource reconfiguration comprises establishing at least one data radio bearer and/or at least one signaling radio bearer for the first network slice,
initiating comprises or relates to indicating, to the user equipment element or function, at least one data radio bearer to be unusable for the first network slice or conditionally usable for the first network slice subject to the handover to the target cell,
the functionality, operability or method comprises obtaining, from the user equipment element or function, a radio resource connection establishment request including an initial service request,
the service request and/or an initial service request is based on a mobile originating service request initiation or a mobile terminating service request initiation,
the serving cell and the target cell have overlapping coverages enabling the user equipment element or function to be concurrently served by both the serving and target cells,
the communication control element or function is or comprises a base station or base transceiver station function in a radio access network of the mobile communication system, such as gNodeB,
the access and/or mobility management element or function is or comprises an access and mobility management function in the mobile communication system.

According to an example aspect of the present disclosure, there is provided an apparatus of (or, stated in other words, operable or for use in/by) an access and/or mobility management element or function in/for a mobile communication system, comprising: means for obtaining, from a communication control element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, means for detecting that the communication control element or function is associated with the first tracking area in which the first network slice is not supported, and means for sending, to the communication control element or function, an indication of transitionary acceptance of activation of a session associated with the first network slice on condition of handover for the session to a tracking area supporting the first network slice, said indication requesting handover of the user equipment element or function to a target cell belonging to a second tracking area supporting the first network slice.

According to an example aspect of the present disclosure, there is provided an apparatus of (or, stated in other words, operable or for use in/by) an access and/or mobility management element or function in/for a mobile communication system, the apparatus comprising at least one processor and at least one memory including computer program code, wherein the processor, with the at least one memory and the computer program code, is configured to cause the apparatus to perform: obtaining, from a communication control element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, detecting that the communication control element or function is associated with the first tracking area in which the first network slice is not supported, and sending, to the communication control element or function, an indication of transitionary acceptance of activation of a session associated with the first network slice on condition of handover for the session to a tracking area supporting the first network slice, said indication requesting handover of the user equipment element or function to a target cell belonging to a second tracking area supporting the first network slice.

According to an example aspect of the present disclosure, there is provided a method of (or, stated in other words, operable or for use in/by) an access and/or mobility management element or function in/for a mobile communication system, comprising: obtaining, from a communication control element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, detecting that the communication control element or function is associated with the first tracking area in which the first network slice is not supported, and sending, to the communication control element or function, an indication of transitionary acceptance of activation of a session associated with the first network slice on condition of handover for the session to a tracking area supporting the first network slice, said indication requesting handover of the user equipment element or function to a target cell belonging to a second tracking area supporting the first network slice.

According to various developments/modifications, any one of the aforementioned method-related and/or apparatus-related example aspects of the present disclosure may include one or more of the following features:
the functionality, operability or method comprises obtaining, from the communication control element or function, an indication of a status or result of the handover for the session,
the functionality, operability or method comprises handling session and/or connection management based on the indication of the status or result of the handover for the session,
when a status or result of the handover for the session is (indicated to be) pendency of the handover, handling of session and/or connection management comprises delaying initiation of setup of the session associated with the first network slice until obtaining a path switch request, indicating the handover of the user equipment element or function to be succeeded, from the target cell and/or another communication control element or function controlling the target cell,
when a status or result of the handover for the session is (indicated to be) pendency of the handover, and an indication of the status or result of the handover for the session comprises an identification of the target cell and/or another communication control element or function controlling the target cell, handling of session and/or connection management comprises causing initiation of setup of the session associated with the first network slice,
when a status or result of the handover for the session is (indicated to be) failure of the handover, handling of session and/or connection management comprises aborting setup of the session associated with the first network slice and/or deactivating the session associated with the first network slice and/or releasing a connection relating to the session associated with the first network slice,
when a status or result of the handover for the session is indicated to be success of the handover, handling of session and/or connection management comprises causing initiation of setup of the session associated with the first network slice,
when the service request is also relating to a second network slice among the network slices allowed for the user equipment element or function, which is supported in the tracking area with which the communication control element or function is associated, handling of session and/or connection management comprises causing initiation of setup of a session associated with the second specific network slice,
the service request is based on a mobile originating service request initiation or a mobile terminating service request initiation,
when the service request is based on a mobile terminating service request initiation, the functionality, operability or method comprises: obtaining, from a session management element or function, a message of mobile terminating data the relating to the first network slice for the user equipment element or function, and initiating paging of the user equipment element or function,
the serving cell and the target cell have overlapping coverages enabling the user equipment element or function to be concurrently served by both the serving and target cells,
the target cell is controlled by the communication control element or function or another communication control element or function,
the communication control element or function is or comprises a base station or base transceiver station function in a radio access network of the mobile communication system, such as gNodeB,
the access and/or mobility management element or function is or comprises an access and mobility management function in the mobile communication system.

According to an example aspect of the present disclosure, there is provided a computer program product comprising (computer-executable) computer program code which, when the program code is executed (or run) on a computer or the program is run on a computer (e.g. a computer of an apparatus according to any one of the aforementioned apparatus-related example aspects of the present disclosure), is configured to cause the computer to carry out the method according to any one of the aforementioned method-related example aspects of the present disclosure.

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

Further developments and/or modifications of the aforementioned exemplary aspects of the present disclosure are set out in the following.

By way of exemplifying embodiments of the present disclosure, a technique for (enabling/realizing) proper handling of a service request with non-homogeneous network slice support in a registration area in/for a mobile communication system.

### Brief description of the drawings

In the following, the present disclosure will be described in greater detail by way of non-limiting examples with reference to the accompanying drawings, in which
Figure 1 shows a schematic diagram of an example of a registration area scenario as a basis of at least one exemplifying embodiment,
Figure 2 shows a flowchart illustrating an example of a paging procedure for the scenario of Figure 1,
Figure 3 shows a flowchart illustrating an example of a paging procedure for the scenario of Figure 1,
Figure 4 shows a flowchart illustrating an example of a method or process according to at least one exemplifying embodiment,
Figure 5 shows a flowchart illustrating an example of a method or process according to at least one exemplifying embodiment,
Figure 6 shows a sequence diagram illustrating an example of a procedure of a case of MO service request initiation with successful handover in a RA configuration of TAs relating to different gNBs according to at least one exemplifying embodiment,
Figure 7 shows a sequence diagram illustrating an example of a procedure of a case of MO service request initiation with failed handover in a RA configuration of TAs relating to different gNBs according to at least one exemplifying embodiment,
Figure 8 shows a sequence diagram illustrating an example of a procedure of a case of MO service request initiation with successful handover in a RA configuration of TAs relating to single gNB according to at least one exemplifying embodiment,
Figure 9 shows a sequence diagram illustrating an example of a procedure of a case of MT service request initiation with successful handover in a RA configuration of TAs relating to different gNBs according to at least one exemplifying embodiment,
Figure 10 shows a sequence diagram illustrating an example of a procedure of a case of MT service request initiation with successful handover in a RA configuration of TAs relating to different gNBs according to at least one exemplifying embodiment,
Figure 11 shows a sequence diagram illustrating an example of a procedure of a case of MT service request initiation with successful handover in a RA configuration of TAs relating to different gNBs according to at least one exemplifying embodiment,
Figure 12 shows a sequence diagram illustrating an example of a procedure of a case of MO service request initiation with successful handover in a RA configuration of TAs relating to different gNBs according to at least one exemplifying embodiment,
Figure 13 shows a schematic block diagram illustrating an example of a structure of apparatuses according to at least one exemplifying embodiment, and
Figure 14 shows a schematic block diagram illustrating an example of a structure of an apparatuses according to at least one exemplifying embodiment.

### Detailed description

The present disclosure is described herein with reference to particular non-limiting examples and to what are presently considered to be conceivable (examples of) embodiments. A person skilled in the art will appreciate that the present disclosure is by no means limited to these examples and embodiments, and may be more broadly applied.

It is to be noted that the following description mainly refers to specifications being used as non-limiting examples for certain exemplifying network configurations and system deployments. Namely, the following description mainly refers to 3GPP standards, being used as non-limiting examples. As such, the description of exemplifying embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as complying with what is described herein and/or exemplifying embodiments described herein are applicable to it.

For examples, the present disclosure is equally applicable in any (mobile/wireless) communication system, such as 5G/NR systems and next-generation systems beyond 5G. For example, the present disclosure is applicable in 3GPP-standardized mobile/wireless communication system of Release 18 onwards.

Hereinafter, various exemplifying embodiments and implementations of the present disclosure and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative/exemplifying, and any other order of respective operations or actions is equally conceivable, if feasible.

According to exemplifying embodiments of the present disclosure, in general terms, there are provided measures/mechanisms for enabling/realizing proper handling of a service request with non-homogeneous network slice support in a registration area in a mobile communication system.

Hereinafter, a non-homogenous registration area scenario, such as e.g. the scenario of Figure 1, is assumed as a basis. Namely, it is assumed that a registration area of a user equipment can comprise tracking areas supporting different network slices such that a tracking area (in the registration area of the user equipment) may not support all allowed network slices of the user equipment. More specifically, it is assumed that a user equipment is served in or connected to a serving cell which is associated with a tracking area (in a registration area of the user equipment) not supporting all network slices allowed for the user equipment.

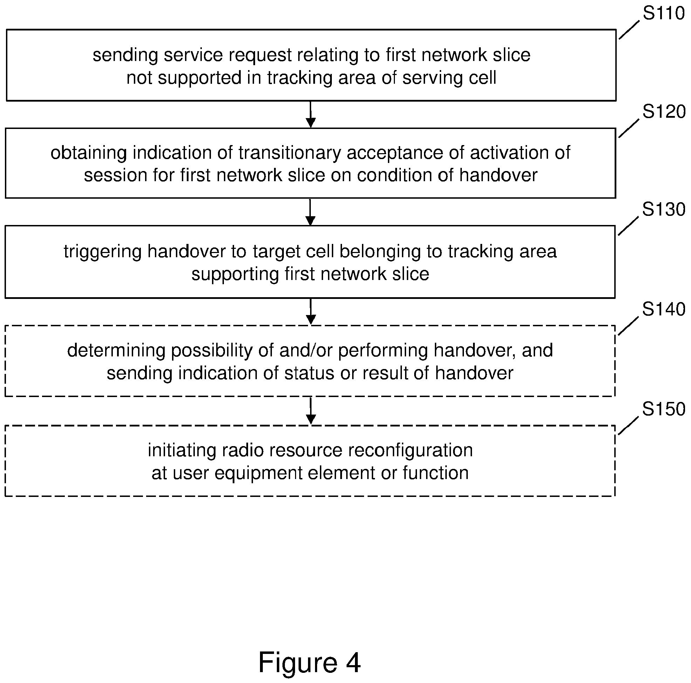

Figure 4 shows a flowchart illustrating an example of a method or process according to at least one exemplifying embodiment. The method or process of Figure 4 is a method or process of (or, stated in other words, operable or for use in/by) a communication control element or function, or an element, function or entity of similar/comparable functionality or operability, in/for a mobile communication system, such as a gNB in a 3GPP network or system.

The thus referenced communication control element or function represents a communication control element or function serving a user equipment (element or function) or controlling a serving cell of a user equipment (element or function) with a non-homogenous network slice support in its registration area, i.e. its registration area does not support all of its allowed network slices, particularly not a first network slice among its allowed network slices.

As shown in Figure 4, the method or process comprises an operation (S110) of sending (e.g. to an access and/or mobility management element or function) a service request of the user equipment (element or function), which relates to at least one first network slice which is not supported in the first tracking area, an operation (S120) of obtaining (e.g. from the access and/or mobility management element or function) an indication of transitionary acceptance of activation of a session associated with the first network slice on condition of handover for the session to a tracking area supporting the first network slice, and an operation (S130) of triggering handover of the user equipment (element or function) to a target cell belonging to a second tracking area supporting the first network slice.

According to various exemplifying embodiments, the indication of transitionary acceptance may comprise, be accompanied by or be related with a tracking area identity/identifier (TAI), i.e. an indicated tracking area (as indicated/suggested by the access and/or mobility management element or function), or may comprise, be accompanied by or be related with a designation of a required handover, i.e. without designation of any specifically indicated/suggested tracking area.

As indicated by dashed lines in Figure 4, the method or process may further comprise an operation (S140) of determining possibility of and/or performing the handover of the user equipment (element or function) from the serving cell to the target cell belonging to the second tracking area supporting the first network slice, and sending, to the access and/or mobility management element or function, an indication of a status or result of the handover for the session. The status or result of the handover for the session is indicated to be either one of pendency of the handover when the handover is not completed, failure of the handover when the handover has failed or is determined to be not feasible, or success of the handover when the handover has succeeded. In determining possibility of the handover, a suitable neighboring cell, which is a cell controlled by the communication control element or function or another communication control element or function, may be identified as the target cell for the handover of the user equipment (element or function). The target cell may be identified using a tracking area identity/identifier (TAI) as provided (by the access and/or mobility management element or function) in, together with or related to the indication of transitionary acceptance, i.e. as a cell of the thus indicated tracking area (as indicated/suggested by the access and/or mobility management element or function), or may be identified as a result of a target cell search on the basis of the mere designation of a required handover (by the access and/or mobility management element or function) in, together with or related to the indication of transitionary acceptance, i.e. as a cell of any suitable tracking area (as found by the communication control element or function).

In the operation S140, performing the handover of the user equipment (element or function) ma comprise sending, to the target cell and/or another communication control element or function controlling the target cell, an indication of transitionary acceptance of activation of a session associated with the first network slice on condition of handover for the session to a tracking area supporting the first network slice. For example, the conditional acceptance indication/message from the access and/or mobility management element or function can be forwarded to the target cell (i.e. its communication control element or function), e.g. within a handover request, thereby enabling the target cell of the handover (i.e. its communication control element or function) to prepare at least one data radio bearer for the first network slice, i.e. the conditionally accepted session associated with the first network slice.

As indicated by dashed lines in Figure 4, the method or process may further comprise an operation (S150) of initiating radio resource reconfiguration at the user equipment (element or function). The radio resource reconfiguration may comprise establishing at least one data radio bearer and/or at least one signaling radio bearer for the first network slice. The initiating means may comprise indicating, to the user equipment (element or function), at least one data radio bearer to be unusable for the first network slice or conditionally usable for the first network slice subject to the handover to the target cell.

It is to be noted that the operations S130, S140 and S150 are based on or provoked by the obtained indication of transitionary acceptance of activation of a session associated with the first network slice on condition of handover for the session to a tracking area supporting the first network slice. Hence, the operations can be performed in a different order or in an at least partly concurrent manner, as appropriate.

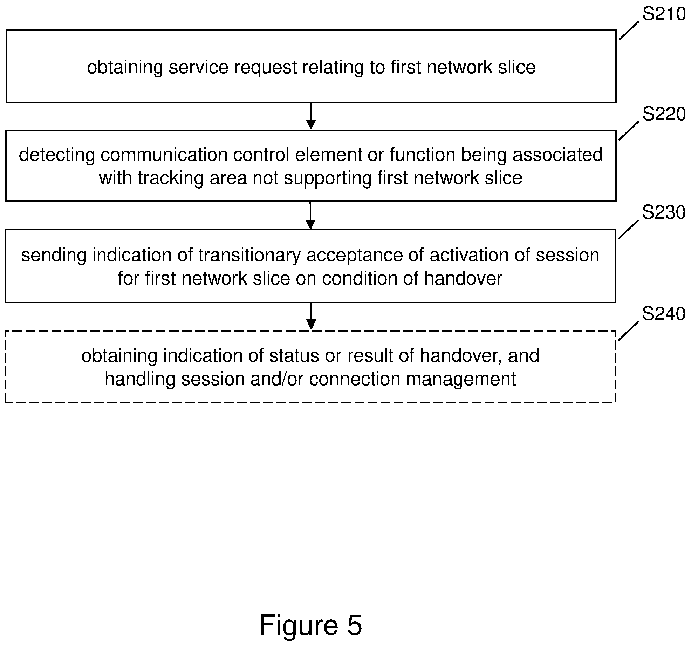

Figure 5 shows a flowchart illustrating an example of a method or process according to at least one exemplifying embodiment. The method or process of Figure 5 is a method or process of (or, stated in other words, operable or for use in/by) an access and/or mobility management element or function, or an element, function or entity of similar/comparable functionality or operability, in/for a mobile communication system, such as an AMF in a 3GPP network or system.

The thus referenced access and/or mobility management element or function is connected to or linked with a communication control element or function serving a user equipment (element or function) or controlling a serving cell of a user equipment (element or function) with a non-homogenous network slice support in its registration area, i.e. its registration area does not support all of its allowed network slices, particularly not a first network slice among its allowed network slices.

As shown in Figure 5, the method or process comprises an operation (S210) of obtaining (e.g. from the communication control element or function) a service request of the user equipment (element or function), which relates to at least one first network slice which is not supported in the first tracking area, an operation (S220) of detecting that the communication control element or function is associated with the first tracking area in which the first network slice is not supported, and an operation (S230) of sending (e.g. to the communication control element or function) an indication of transitionary acceptance of activation of a session associated with the first network slice on condition of handover for the session to a tracking area supporting the first network slice, said indication requesting handover of the user equipment (element or function) to a target cell belonging to a second tracking area supporting the first network slice.

According to various exemplifying embodiments, the indication of transitionary acceptance may comprise, be accompanied by or be related with a tracking are identity/identifier (TAI), i.e. an indicated tracking area (as indicated/suggested by the access and/or mobility management element or function), or may comprise, be accompanied by or be related with a designation of a required handover, i.e. without designation of any specifically indicated/suggested tracking area. Hence, the access and/or mobility management element or function can designate a suitable tracking area as a handover destination and thus provide a tracking area identity/identifier (TAI) (to the communication control element or function) in, together with or related to the indication of transitionary acceptance, or can designate the mere need for a handover and thus provide a mere designation of a required handover (to the communication control element or function) in, together with or related to the indication of transitionary acceptance.

As indicated by dashed lines in Figure 5, the method or process may further comprise an operation (S240) of obtaining (e.g. from the communication control element or function) an indication of a status or result of the handover for the session, and handling session and/or connection management based on the indication of the status or result of the handover for the session.

When the status or result of the handover for the session is indicated to be pendency of the handover, the handling of the session and/or connection management may comprise delaying initiation of setup of the session associated with the first network slice until obtaining a path switch request, indicating the handover of the user equipment (element or function) to be succeeded, from the target cell and/or another communication control element or function controlling the target cell.

When the status or result of the handover for the session is indicated to be pendency of the handover, and the indication of the status or result of the handover for the session comprises an identification of the target cell and/or another communication control element or function controlling the target cell, the handling of the session and/or connection management may comprise causing initiation of setup of the session associated with the first network slice.

When the status or result of the handover for the session is indicated to be failure of the handover, the handling of the session and/or connection management may comprise aborting setup of the session associated with the first network slice and/or deactivating the session associated with the first network slice and/or releasing a connection relating to the session associated with the first network slice.

When the status or result of the handover for the session is indicated to be success of the handover, the handling of the session and/or connection management may comprise causing initiation of setup of the session associated with the first network slice.

When the service request is also relating to a second network slice among the network slices allowed for the user equipment (element or function), which is supported in the tracking area with which the communication control element or function is associated, the handling of the session and/or connection management may comprises causing initiation of setup of a session associated with the second specific network slice.

Herein, an operation of sending shall encompass causing/initiating/ provoking a corresponding transmission and/or performing/realizing an actual transmission, and an operation of obtaining shall encompass performing/realizing an actual reception and/or acquiring/processing/ accepting upon a corresponding reception. Any sent/obtained data, information, request, indication or the like may be provided as such (e.g. in/as a dedicated element), as contents of/in some message (in any conceivable form/format), or in any other way, as long as it can thereby be sent/obtained accordingly.

It is to be noted that a handover generally involves both a handover of the user equipment (element or function) and a handover for the sessions of the user equipment (element or function), particularly the session associated with the relevant network slice related with the service request. That is, when the user equipment (element or function) is handed over, corresponding one or more sessions are also handed over.

In the following, various use cases and applications of service request handling with non-homogeneous network slice support in a registration area according to various exemplifying embodiments are exemplified. Such service request handling generally refers to UE transition from (RRC) idle mode to (RRC) connected mode, in/for either mobile originating (MO) service request initiation or mobile terminating (MT) service request initiation. In case of mobile terminating (MT) service request initiation, such service request handling also refers to UE paging.

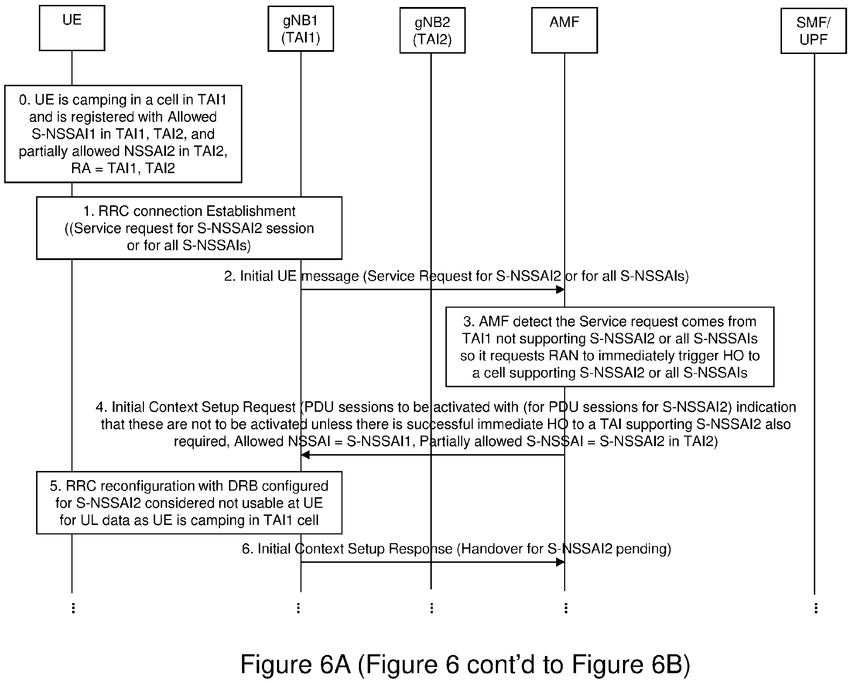

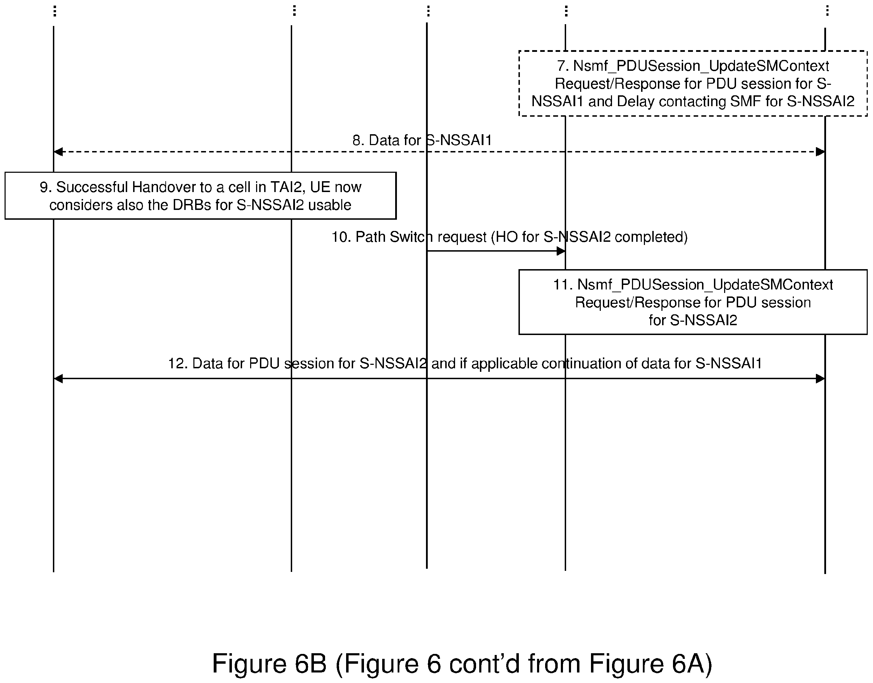

For the sake of illustration only, the examples of Figures 6 to 9 are assumed to be based on the registration area scenario of Figure 1. Accordingly, the UE may be registered (by AMF) in a registration area comprising a first tracking area TAI1 and a second tracking area TAI2, wherein the allowed network slices of the UE are (registered) such that the allowed NSSAI is S-NSSAI 1 (i.e. S-NSSAI 1 is allowed/supported in both TAI1 and TAI2) and partially allowed S-NSSAI 2 in TAI2 (i.e. S-NSSAI 2 is allowed/supported in TAI2 only).

Such registration may result from a registration procedure between the UE and the AMF, in which the AMF provides to the UE an indication of Allowed NSSAI in RA and of Partially Allowed S-NSSAIs in RA with TAIs of RA where the Partially Allowed S-NSSAIs is supported. Namely, upon a registration request from the UE, requesting NSSAI (S-NSSAI 1, S-NSSAI 2), the AMF may decide on the allowed network slices and respond to the UE by a registration acceptance message indicating S-NSSAI 1 as the allowed NSSAI for the entire registration area and indicating S-NSSAI 2 as partly allowed S-NSSAI for the partial registration area including only TAI2.

Figure 6 shows a sequence diagram illustrating an example of a procedure of a case of MO service request initiation with successful handover in a RA configuration of TAs relating to different gNBs according to at least one exemplifying embodiment.

The exemplary procedure of Figure 6 is as follows.
1) UE (in RRC idle mode) is camping in Cell 1 of TAI 1 with active network slices S-NSSAI 1 and S-NSSAI 2 according to the above-described registration.
2) UE and gNB1 perform RRC Connection establishment based on UE's MO service request for a PDU session for (at least) S-NSSAI 2 or all allowed S-NSSAIs (i.e. allowed NSSAI). Therein, UE sends RRC Setup Request, and gNB1 responds by RRC Setup. Thereby, UE moves to RRC connected mode. Then, UE sends RRC Setup Complete which carries the service request inside the NAS message that will be sent as Initial UE message to AMF.
3) Upon reception of Initial UE message, AMF detects/determines that this service request is related to at least one network slice that is not supported by Cell 1 where UE is currently camping or served. Hence, AMF decides to request and requests handover for the requested PDU session for (at least) S-NSSAI 2 to a cell of a tracking area supporting (at least) S-NSSAI 2.
4) AMF sends Initial Context Setup Request message to gNB1, which carries a corresponding indication/request. Namely, AMF provides to gNB1 an indication of transitionary acceptance of activation of a session associated with (at least) S-NSSAI 2 on condition of handover for the PDU session to a tracking area supporting (at least) S-NSSAI 2, namely TAI2 (which is indicated/suggested accordingly). This includes a trigger for a handover of the UE to a cell/TA that supports the network slice/s of the UE for the request, and indicates that the service request is to be accepted if UE is handed over to a cell/TA that supports the network slice/s of the UE for the request.
5) gNB1 performs RRC Reconfiguration with UE. Therein, gNB1 sends RRC Reconfiguration to UE, e.g. establishing SRB2 and the DRBs, and UE sends RRC Reconfiguration Complete acknowledging the configuration to gNB1. In this regard, UE may be indicated at least one DRB to be unusable for the (at least) S-NSSAI 2 or conditionally usable for the (at least) S-NSSAI 2 subject to the handover.
6) gNB1 may determine possibility of and/or perform/start the handover. Then, gNB1 sends Initial Context Setup Response to AMF, indicating that the handover is initiated but pending, i.e. pendency of the handover.
7) AMF delays initiation of setup of the requested PDU session for S-NSSAI 2, but waits for a path switch request from gNB2 of the target cell to contact SMF to set up the requested PDU session for S-NSSAI 2 with gNB2. If the service request applies for all S-NSSAIs, i.e. also applies for S-NSSAI 1, AMF causes initiation of setup of the requested PDU session for S-NSSAI 1 by contacting SMF to set up the requested PDU session for S-NSSAI 1 with gNB1. The applicable connectivity for data for S-NSSAI 1 is enabled.
8) The requested PDU session for S-NSSAI 1 (if applicable) is enabled/activated, wherein data for S-NSSAI 1 is enabled/activated.
9) In parallel to steps 5 and/or 6, gNB1 triggers a handover of UE as a reaction to the indication in step 4. That is, handover of UE is performed here. In case of a successful handover, at least one DRB for S-NSSAI 2 is also considered to be usable.
10) As a result of the successful handover, gNB2 controlling the target cell sends the path switch request to AMF, indicating that the handover is completed.
11) AMF causes initiation of setup of the requested PDU session for S-NSSAI 2 by contacting SMF to set up the requested PDU session for S-NSSAI 2 with gNB2. The applicable connectivity for data for S-NSSAI 2 is enabled. That is, handover for/of a corresponding session is performed here.
12) The requested PDU session is enabled/activated, wherein data for S-NSSAI 2 is enabled/activated, while data for S-NSSAI 1 (if any) is continued.

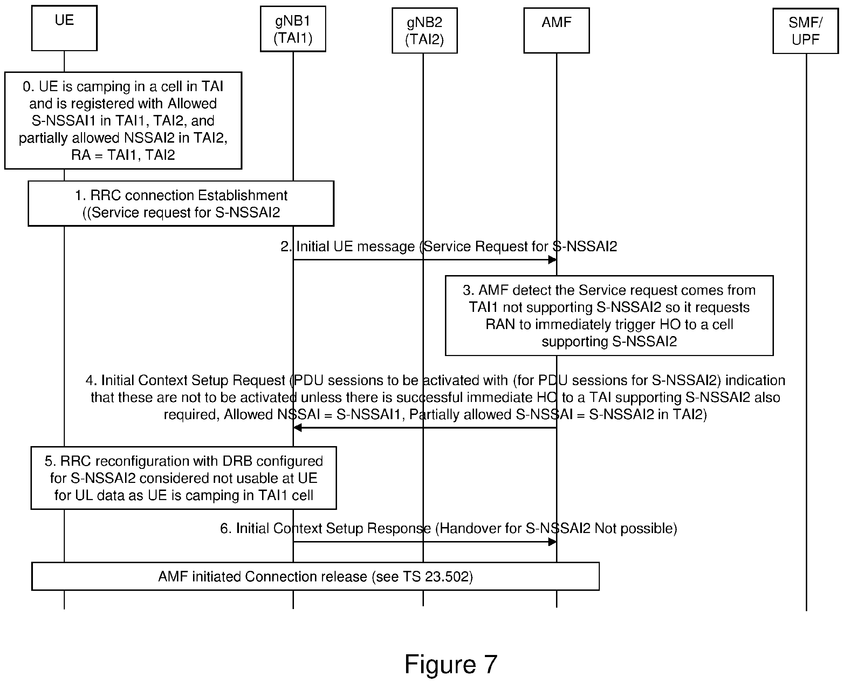

Figure 7 shows a sequence diagram illustrating an example of a procedure of a case of MO service request initiation with failed handover in a RA configuration of TAs relating to different gNBs according to at least one exemplifying embodiment.

The exemplary procedure of Figure 7 is as follows.
1) UE (in RRC idle mode) is camping in Cell 1 of TAI 1 with active network slices S-NSSAI 1 and S-NSSAI 2 according to the above-described registration.
2) UE and gNB1 perform RRC Connection establishment based on UE's MO service request for a PDU session for (only) S-NSSAI 2. Therein, UE sends RRC Setup Request, and gNB1 responds by RRC Setup. Thereby, UE moves to RRC connected mode. Then, UE sends RRC Setup Complete which carries the service request inside the NAS message that will be sent as Initial UE message to AMF.
3) Upon reception of Initial UE message, AMF detects/determines that this service request is related to a network slice that is not supported by Cell 1 where UE is currently camping or served. Hence, AMF decides to request and requests handover for the requested PDU session for S-NSSAI 2 to a cell of a tracking area supporting S-NSSAI 2.
4) AMF sends Initial Context Setup Request message to gNB1, which carries a corresponding indication/request. Namely, AMF provides to gNB1 an indication of transitionary acceptance of activation of a session associated with S-NSSAI 2 on condition of handover for the PDU session to a tracking area supporting S-NSSAI 2, namely TAI2 (which is indicated/suggested accordingly). This includes a trigger for a handover of the UE to a cell/TA that supports the network slice of the UE for the request, and indicates that the service request is to be accepted if UE is handed over to a cell/TA that supports the network slice of the UE for the request.
5) gNB1 performs RRC Reconfiguration with UE. Therein, gNB1 sends RRC Reconfiguration to UE, e.g. establishing SRB2 and the DRBs, and UE sends RRC Reconfiguration Complete acknowledging the configuration to gNB1. In this regard, UE may be indicated at least one DRB to be unusable for S-NSSAI 2 or conditionally usable for S-NSSAI 2 subject to the handover.
6) gNB1 may determine possibility of and/or perform/start the handover. Then, gNB1 sends Initial Context Setup Response to AMF, indicating that the handover is not possible (has failed or is determined to be not feasible), i.e. failure of the handover.
7) AMF detects/determines that the requested service/session fails. Thereupon, the AMF may abort setup of the requested PDU session for S-NSSAI 2 and/or deactivate the requested PDU session for S-NSSAI 2 and/or release a connection relating to the requested PDU session for S-NSSAI 2.

While illustrated differently in Figure 7, AMF may exchange corresponding messages with SMF/UPF, like in the sequence of Figure 6, such as Nsmf_PDUSession_UpdateSMContext Request/Response for a PDU session for S-NSSAI 2 set as deactivated. If applicable, a corresponding PDU session for S-NSSAI 1 could be established, like in the sequence of Figure 6.

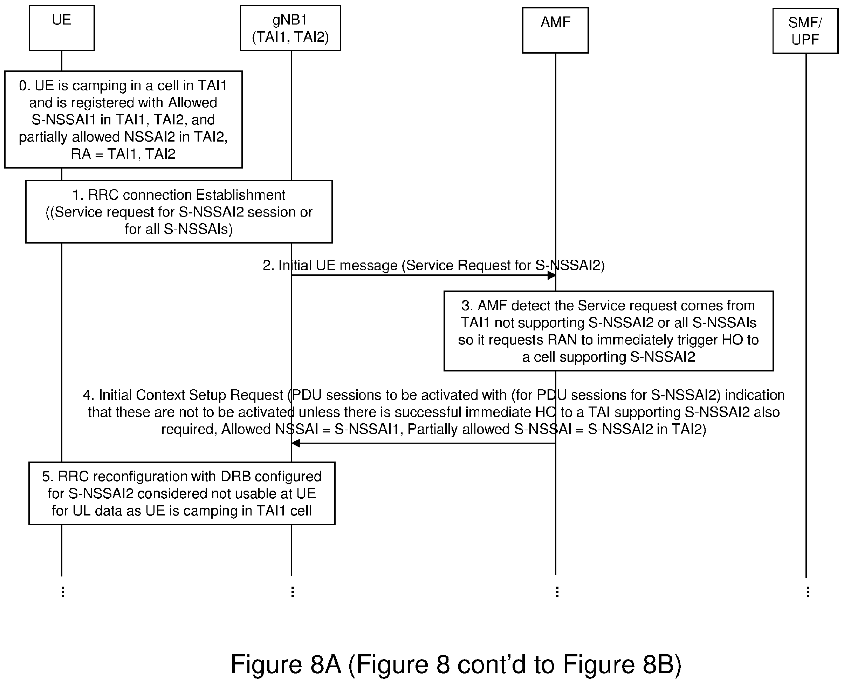

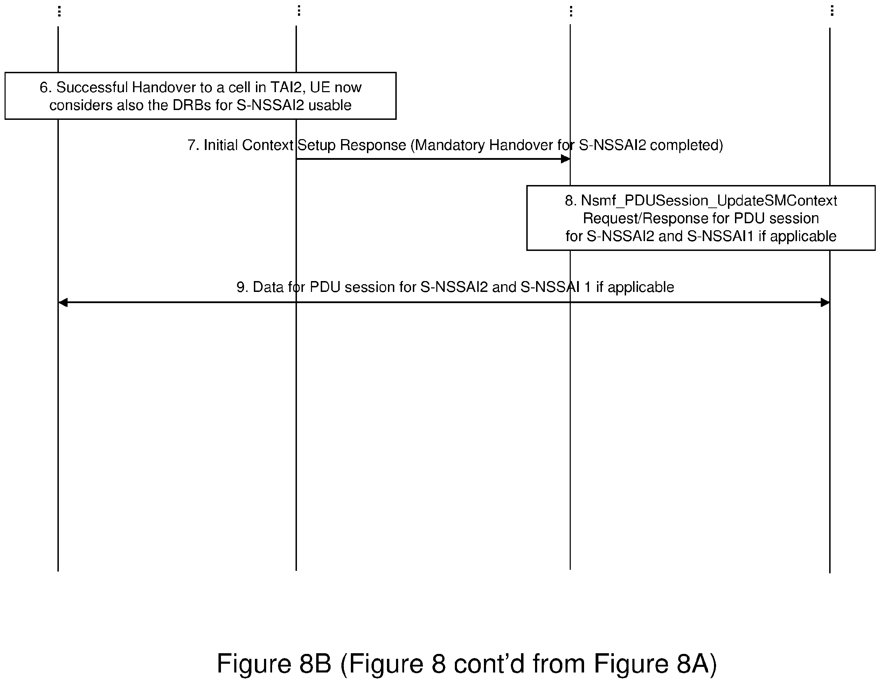

Figure 8 shows a sequence diagram illustrating an example of a procedure of a case of MO service request initiation with successful handover in a RA configuration of TAs relating to single gNB according to at least one exemplifying embodiment.

The exemplary procedure of Figure 8 is as follows.
1) UE (in RRC idle mode) is camping in Cell 1 of TAI 1 with active network slices S-NSSAI 1 and S-NSSAI 2 according to the above-described registration.
2) UE and gNB perform RRC Connection establishment based on UE's MO service request for a PDU session for (at least) S-NSSAI 2 or all allowed S-NSSAIs (i.e. allowed NSSAI). Therein, UE sends RRC Setup Request, and gNB responds by RRC Setup. Thereby, UE moves to RRC connected mode. Then, UE sends RRC Setup Complete which carries the service request inside the NAS message that will be sent as Initial UE message to AMF.
3) Upon reception of Initial UE message, AMF detects/determines that this service request is related to at least one network slice that is not supported by Cell 1 where UE is currently camping or served. Hence, AMF decides to request and requests handover for the requested PDU session for (at least) S-NSSAI 2 to a cell of a tracking area supporting (at least) S-NSSAI 2.
4) AMF sends Initial Context Setup Request message to gNB, which carries a corresponding indication/request. Namely, AMF provides to gNB an indication of transitionary acceptance of activation of a session associated with (at least) S-NSSAI 2 on condition of handover for the PDU session to a tracking area supporting (at least) S-NSSAI 2, namely TAI2 (which is indicated/suggested accordingly). This includes a trigger for a handover of the UE to a cell/TA that supports the network slice/s of the UE for the request, and indicates that the service request is to be accepted if UE is handed over to a cell/TA that supports the network slice/s of the UE for the request.
5) gNB performs RRC Reconfiguration with UE. Therein, gNB sends RRC Reconfiguration to UE, e.g. establishing SRB2 and the DRBs, and UE sends RRC Reconfiguration Complete acknowledging the configuration to gNB. In this regard, UE may be indicated at least one DRB to be unusable for the (at least) S-NSSAI 2 or conditionally usable for the (at least) S-NSSAI 2 subject to the handover.
6) gNB triggers a handover of UE as a reaction to the indication in step 4. That is, handover of UE is performed here. In case of a successful handover, at least one DRB for S-NSSAI 2 is also considered to be usable.
7) Upon a successful handover, gNB sends Initial Context Setup Response to AMF, indicating that the handover is completed/succeeded, i.e. success of the handover.
8) AMF causes initiation of setup of the requested PDU session for S-NSSAI 2 by contacting SMF to set up the requested PDU session for S-NSSAI 2 with gNB. If the service request applies for all S-NSSAIs, i.e. also applies for S-NSSAI 1, AMF causes initiation of setup of the requested PDU session for S-NSSAI 1 by contacting SMF to set up the requested PDU session for S-NSSAI 1 with gNB1. That is, handover for/of a corresponding session is performed here. The applicable connectivity for data for S-NSSAIs 1 and 2 is enabled
9) The requested PDU session for S-NSSAI 2 and S-NSSAI 1 (if applicable) is enabled/activated, wherein data for S-NSSAI 2 and S-NSSAI 1 (if any) is enabled/activated.

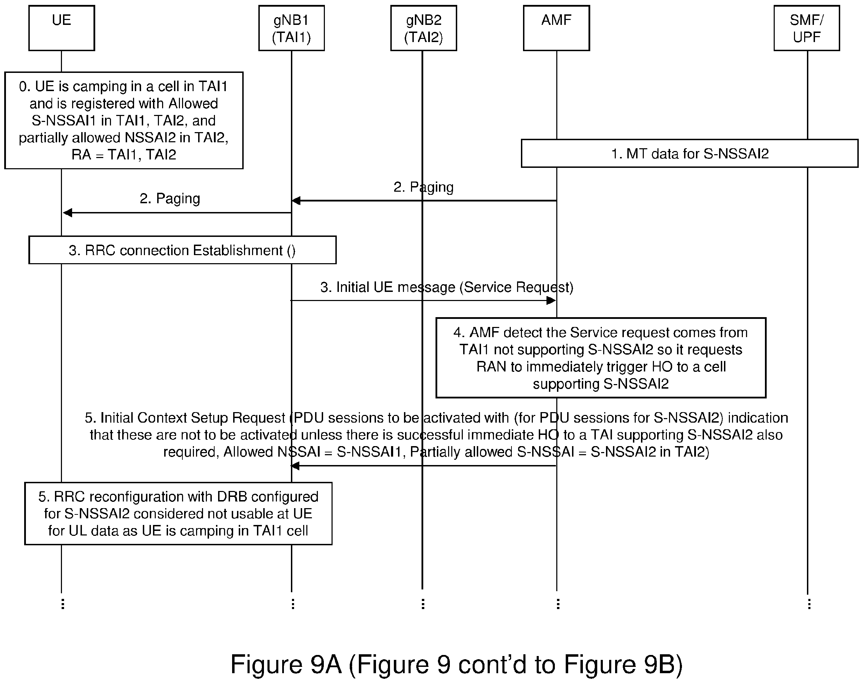

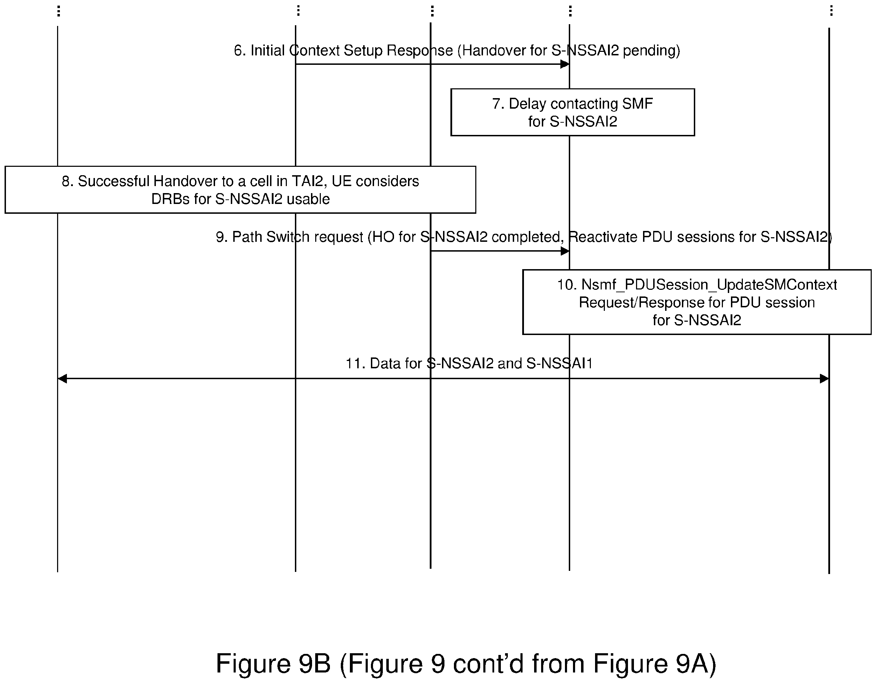

Figure 9 shows a sequence diagram illustrating an example of a procedure of a case of MT service request initiation with successful handover in a RA configuration of TAs relating to different gNBs according to at least one exemplifying embodiment.

The exemplary procedure of Figure 9 is as follows.
0) UE (in RRC idle mode) is camping in Cell 1 of TAI 1 with active network slices S-NSSAI 1 and S-NSSAI 2 according to the above-described registration.
1) AMF receives MT (or DL) data for S-NSSAI 2, i.e. a request for a PDU session for S-NSSAI 2.
2) AMF sends a paging request to the serving cell, i.e. Cell 1, of the UE to gNB1. And gNB1 sends a paging request to UE.
3) UE and gNB1 perform RRC Connection establishment based on UE's MO service request for a PDU session for (only) S-NSSAI 2. Therein, UE sends RRC Setup Request, and gNB1 responds by RRC Setup. Thereby, UE moves to RRC connected mode. Then, UE sends RRC Setup Complete which carries the service request inside the NAS message that will be sent as Initial UE message to AMF.
4) Upon reception of Initial UE message, AMF detects/determines that this service request is related to a network slice that is not supported by Cell 1 where UE is currently camping or served. Hence, AMF decides to request and requests handover for the requested PDU session for S-NSSAI 2 to a cell of a tracking area supporting S-NSSAI 2.
5) AMF sends Initial Context Setup Request message to gNB1, which carries a corresponding indication/request. Namely, AMF provides to gNB1 an indication of transitionary acceptance of activation of a session associated with S-NSSAI 2 on condition of handover for the PDU session to a tracking area supporting S-NSSAI 2, namely TAI2 (which is indicated/suggested accordingly). This includes a trigger for a handover of the UE to a cell/TA that supports the network slice of the UE for the request, and indicates that the service request is to be accepted if UE is handed over to a cell/TA that supports the network slice of the UE for the request.
5) gNB1 performs RRC Reconfiguration with UE. Therein, gNB1 sends RRC Reconfiguration to UE, e.g. establishing SRB2 and the DRBs, and UE sends RRC Reconfiguration Complete acknowledging the configuration to gNB1. In this regard, UE may be indicated at least one DRB to be unusable for the S-NSSAI 2 or conditionally usable for the S-NSSAI 2 subject to the handover.
6) gNB1 may determine possibility of and/or perform/start the handover. Then, gNB1 sends Initial Context Setup Response to AMF, indicating that the handover is initiated but pending, i.e. pendency of the handover.
7) AMF delays initiation of setup of the requested PDU session for S-NSSAI 2, but waits for a path switch request from gNB2 of the target cell to contact SMF to set up the requested PDU session for S-NSSAI 2 with gNB2.
8) In parallel to steps 5 and/or 6, gNB1 triggers a handover of UE as a reaction to the indication in step 5. That is, handover of UE is performed here. In case of a successful handover, at least one DRB for S-NSSAI 2 is also considered to be usable.
9) As a result of the successful handover, gNB2 controlling the target cell sends the path switch request to AMF, indicating that the handover is completed.
10) AMF causes initiation of setup of the requested PDU session for S-NSSAI 2 by contacting SMF to set up the requested PDU session for S-NSSAI 2 with gNB2. That is, handover for/of a corresponding session is performed here. The applicable connectivity for data for S-NSSAI 2 is enabled.
11) The requested PDU session is enabled/activated, wherein data for S-NSSAI 2 is enabled/activated (while data for S-NSSAI 1 (if any) may be continued).

In the following, further use cases and applications of service request handling with non-homogeneous network slice support in a registration area according to various exemplifying embodiments are exemplified, again referring to service request handling for UE transition from (RRC) idle mode to (RRC) connected mode, in/for either mobile originating (MO) service request initiation or mobile terminating (MT) service request initiation.

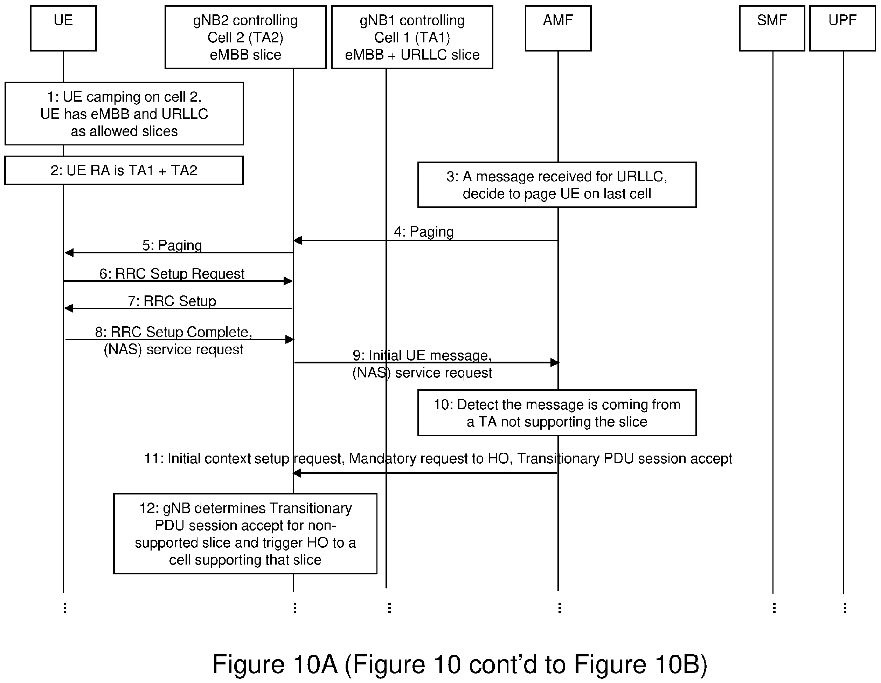

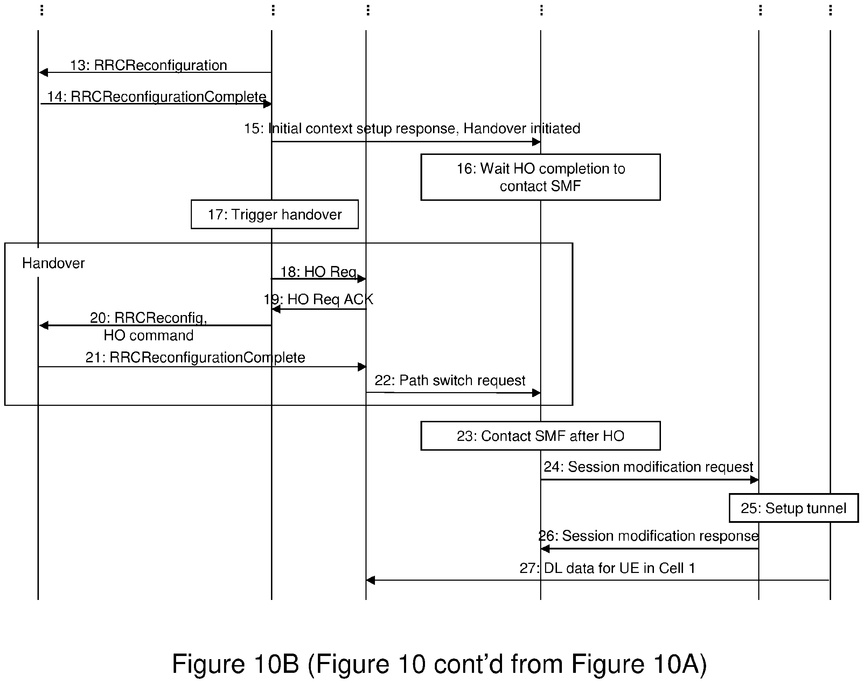

The examples of Figures 10 to 12 are assumed to be based on different registration area scenarios, as are evident from the labeling of the involved entities. Therein, eMBB and URLLC are adopts as specific non-limiting examples for network slices (instead of more generally referring to S-NSSAI 1 and 2 as in Figures 6 to 9).

Figure 10 shows a sequence diagram illustrating an example of a procedure of a case of MT service request initiation with successful handover in a RA configuration of TAs relating to different gNBs according to at least one exemplifying embodiment.

The exemplary procedure of Figure 10 is as follows.
1) UE (in RRC idle mode) is camping in Cell 2 with active network slices eMBB and URLLC.
2) UE's RA is configured to be TA1 and TA2.
3) AMF needs to page the UE for MT (or DL) data for URLLC.
4) AMF sends a paging message to gNB2 as gNB2 controls Cell2 which is the serving cell which reported a location of UE.
5) gNB2 sends a paging message to UE.
6) UE sends RRC Connection Setup Request to gNB2.
7) gNB2 sends RRC Setup to UE, after the reception of which UE moves to RRC connected mode.
8) UE sends RRC Setup Complete which carries the service request inside the NAS message that will be sent as Initial UE message to AMF.
9) gNB2 sends Initial UE message to AMF including the service request.
10) Upon reception of Initial UE message, AMF detects/determines that this service request is related to a network slice, i.e. URLCC, that is not supported by the cell, i.e. Cell 2, where UE is currently camping or served.
11) AMF sends Initial Context Setup Request to gNB2. This includes a trigger for a handover of the UE to a cell/TA that supports the network slice of the UE for the request, i.e. URLLC. This further indicates that the service request is to be accepted if UE is handed over to a cell/TA that supports the network slice of the UE for the request, i.e. URLLC.
12) gNB2 determines accepted PDU sessions associated with non-supported network slice, together with above indicators, and thus identifies/finds a suitable target cell for supporting the involved network slice, i.e. Cell 1 supporting URLLC.
13) gNB2 sends RRC Reconfiguration to UE, establishing SRB2 and the DRBs.
14) UE sends RRC Reconfiguration Complete acknowledging the configu ration.
15) gNB2 sends Initial Context Setup Response to AMF, indicating that the handover is initiated but pending, i.e. pendency of the handover.
16) AMF waits for the path switch request from the target cell, i.e. gNB1, to contact SMF to set up the session for URLLC with the gNB1.
17) In parallel to steps 13 to 15, gNB2 triggers a handover of UE as a reaction to the message in step 11, which handover of UE is performed subsequently.
18) gNB2 sends a handover request to gNB1 with a neighbor cell that supports the requested network slice of UE, and (potentially) has overlapping coverage, i.e. physical coverage enabling UE to be concurrently served by gNB1 and gNB2 (e.g. potentially inter-frequency cell, intra-frequency with beamforming for interference cancellation, or the like), with the serving cell of UE, i.e. the cell (controlled by gNB2) that does not supports the requested network slice of the UE.
19) gNB 1 acknowledges the handover request.
20) gNB2 sends the handover command together with RRC Reconfiguration to UE.
21) UE does random access and sends RRC Reconfiguration Complete to gNB 1 controlling Cell 1.
22) gNB 1 sends the path switch request to AMF.
23) After reception of path switch request from gNB1, AMF resumes the procedure to contact SMF for setting up the requested session for URLLC.
24) SMF is contacted to modify the session of the UE accordingly, i.e. perform a corresponding session handover.
25) SMF sets up the UPF tunnel for URLLC to gNB1.
26) SMF acknowledges the session modification/handover to AMF.
27) UPF sends the DL data for URLLC to the UE via gNB1, i.e. in Cell 1.

In one variant, gNB2 may indicate to AMF in step 15 the ID of the target cell/gNB that the UE will be handed over to. Using this information, AMF and SMF may complete steps 23 to 26 while gNB2 is preparing and performing the handover and the UE is performing random access to the target cell. Thereby, the delay in reporting to SMF (steps 15 to 22) may be not needed if the RAN behavior in RRC connected mode is to not handle data transmission for network slices that are not working in the TA of the current cell.

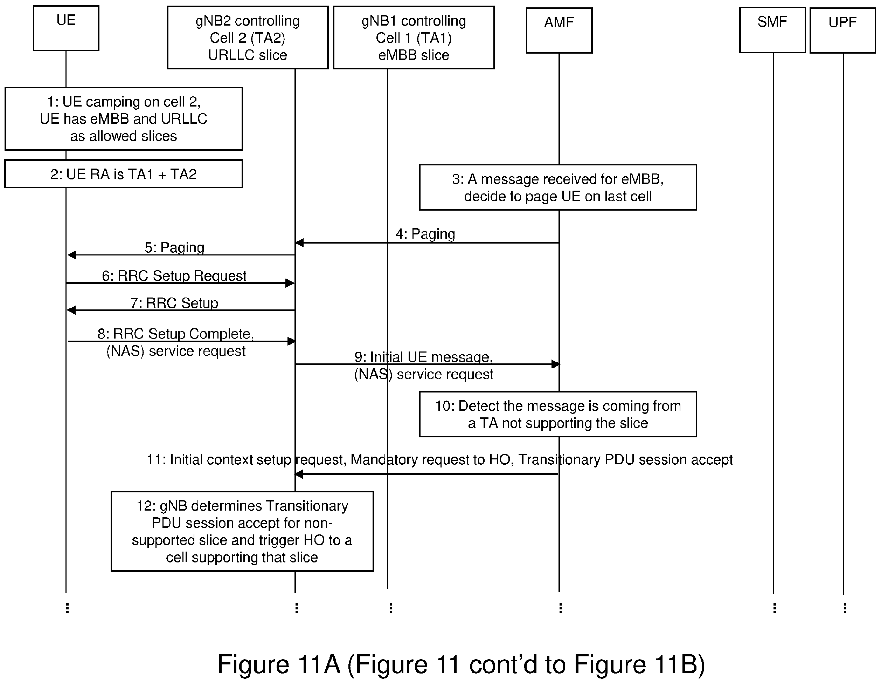

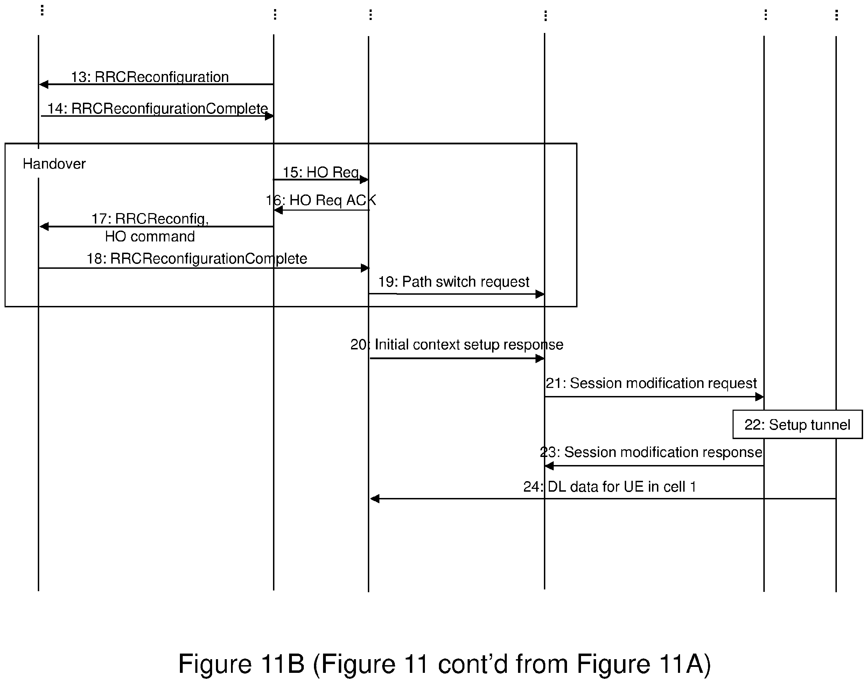

Figure 11 shows a sequence diagram illustrating an example of a procedure of a case of MT service request initiation with successful handover in a RA configuration of TAs relating to different gNBs according to at least one exemplifying embodiment.

The exemplary procedure of Figure 11 is as follows.
1) UE (in RRC idle mode) is camping in Cell 2 with active network slices eMBB and URLLC.
2) UE's RA is configured to be TA1 and TA2.
3) AMF needs to page the UE for MT (or DL) data for eMBB.
4) AMF sends a paging message to gNB2 as gNB2 controls Cell2 which is the serving cell which reported a location of UE.
5) gNB2 sends a paging message to UE.
6) UE sends RRC Connection Setup Request to gNB2.
7) gNB2 sends RRC Setup to UE, after the reception of which UE moves to RRC connected mode.
8) UE sends RRC Setup Complete which carries the service request inside the NAS message that will be sent as Initial UE message to AMF
9) gNB2 sends Initial UE message to AMF including the service request.
10) Upon reception of Initial UE message, AMF detects/determines that this service request is related to a network slice, i.e. eMBB, that is not supported by the cell, i.e. Cell 2, where UE is currently camping or served.
11) AMF sends Initial Context Setup Request to gNB2. This includes a trigger for a handover of the UE to a cell/TA that supports the network slice of the UE for the request, i.e. eMBB. This further indicates that the service request is to be accepted if UE is handed over to a cell/TA that supports the network slice of the UE for the request, i.e. eMBB.
12) gNB2 determines accepted PDU sessions associated with non-supported network slice, together with above indicators, and thus identifies/finds a suitable target cell for supporting the involved network slice, i.e. Cell 1 supporting eMBB.
13) gNB2 sends RRC Reconfiguration to UE, establishing SRB2 and the DRBs.
14) UE sends RRC Reconfiguration Complete acknowledging the configuration.
15) Upon triggering the handover, handover of UE is performed, wherein gNB2 sends a handover request to gNB1 with a neighbor cell that supports the requested network slice of UE, and (potentially) has overlapping coverage, i.e. physical coverage enabling UE to be concurrently served by gNB1 and gNB2 (e.g. potentially inter-frequency cell, intra-frequency with beamforming for interference cancellation, or the like), with the serving cell of UE, i.e. the cell (controlled by gNB2) that does not supports the requested network slice of the UE.
16) gNB 1 acknowledges the handover request.
17) gNB2 sends the handover command together with RRC Reconfiguration to UE.
18) UE does random access and sends RRC Reconfiguration Complete to gNB 1 controlling Cell 1.
19) gNB 1 sends the path switch request to AMF.
20) gNB1 sends Initial Context Setup Response to AMF, indicating that the handover is completed/succeeded, i.e. success of the handover.
21) After reception of Initial Context Setup Response from gNB1, AMF contacts SMF for setting up the requested session for eMBB, i.e. to modify the session of the UE accordingly, i.e. perform a corresponding session handover.
22) SMF sets up the UPF tunnel for eMBB to gNB1.
23) SMF acknowledges the session modification/handover to AMF.
24) UPF sends the DL data for eMBB to the UE via gNB1, i.e. in Cell 1.

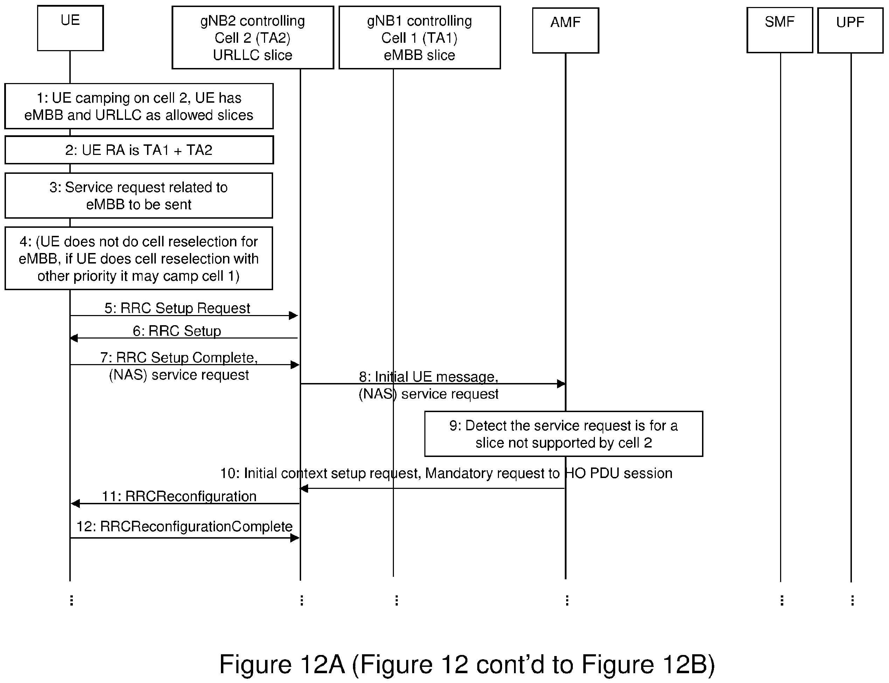

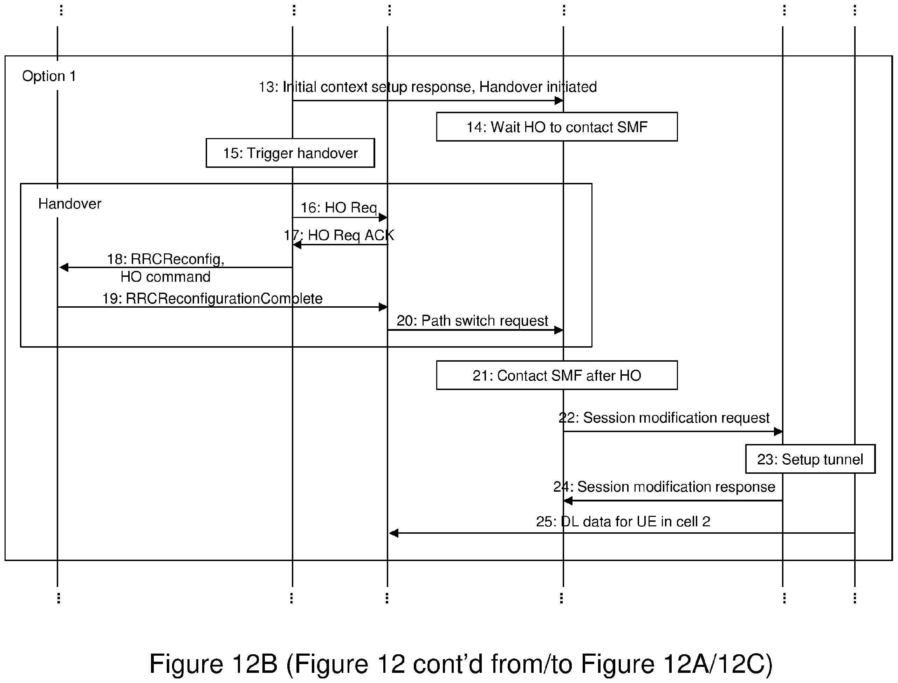

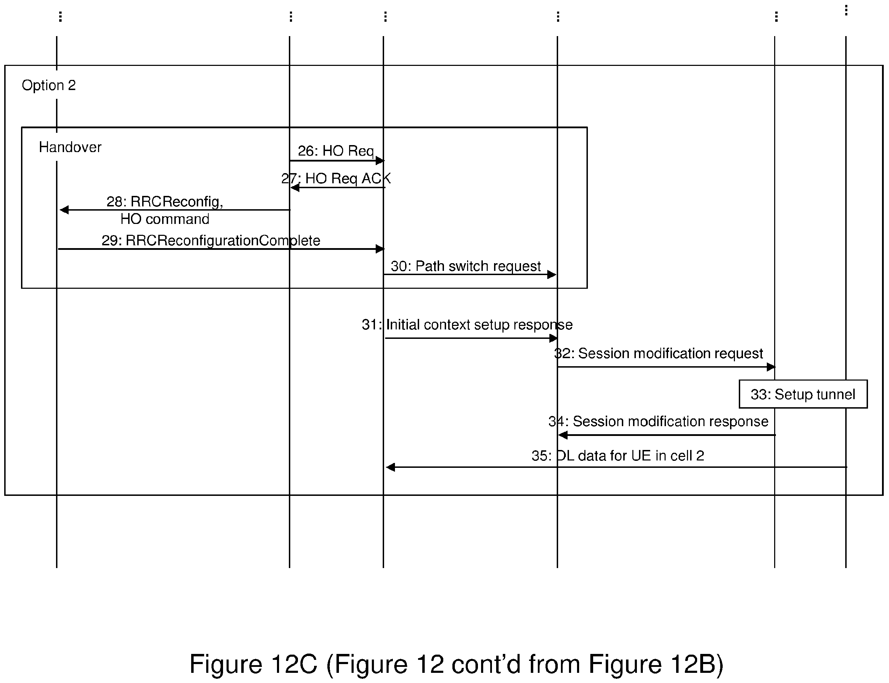

Figure 12 shows a sequence diagram illustrating an example of a procedure of a case of MO service request initiation with successful handover in a RA configuration of TAs relating to different gNBs according to at least one exemplifying embodiment.

The exemplary procedure of Figure 12 is as follows.
1) UE (in RRC idle mode) is camping in Cell 2 with active network slices eMBB and URLLC.
2) UE's RA is configured to be TA1 and TA2.
3) UE initiates a service request for MO (or UL) data for eMBB.
4) UE does not perform cell reselection for the MO (or UL) data for eMBB but stays camping in Cell 2.
5) UE sends RRC Connection Setup Request to gNB2.
6) gNB2 sends RRC Setup to UE, after the reception of which UE moves to RRC connected mode.
7) UE sends RRC Setup Complete which carries the service request inside the NAS message that will be sent as Initial UE message to AMF
8) gNB2 sends Initial UE message to AMF including the service request.
9) Upon reception of Initial UE message, AMF detects/determines that this service request is related to a network slice, i.e. eMBB, that is not supported by the cell, i.e. Cell 2, where UE is currently camping or served.
10) AMF sends Initial Context Setup Request to gNB2. This includes a trigger for a handover of the UE to a cell/TA that supports the network slice of the UE for the request, i.e. eMBB. This further indicates that the service request is to be accepted if UE is handed over to a cell/TA that supports the network slice of the UE for the request, i.e. eMBB.
11) Upon a corresponding determination (not shown), gNB2 sends RRC Reconfiguration to UE, establishing SRB2 and the DRBs.
12) UE sends RRC Reconfiguration Complete acknowledging the configuration.

In a first option, the procedure may continue like in the example of Figure 10 above. In this alternative, steps 13 to 25 of Figure 12 are performed, which basically correspond to steps 15 to 27 of Figure 10, and reference is made to the description of Figure 10 for details.

In a second option, the procedure may continue like in the example of Figure 11 above. In this alternative, steps 26 to 35 of Figure 12 are performed, which basically correspond to steps 15 to 24 of Figure 11, and reference is made to the description of Figure 11 for details.

In the procedure of any one of Figures 6 to 12, the handover may comprise that the serving gNB sends/forwards the conditional acceptance indication/message (as obtained from AMF) to the target node, e.g. before, relate to or within the handover request. Upon obtaining such conditional acceptance indication/message, the target node may prepare one or more DRBs for the conditionally accepted PDU session. As one illustrative example referring to Figure 6, gNB1 may send/forward (the relevant contents of) Initial Context Setup Request (as obtained/received in step 4) to gNB2, within the context of the handover in step 9, and gNB2 may prepare corresponding DRB/DRBs within the context of the handover in step 9.

In view of Figures 6 to 12, it is to be noted that all specifics, such as message names, protocol indications, or the like, are of mere exemplary and illustrative nature (while depending on a specific implementation), and do not limit the scope and/or applicability of the present disclosure. Further, it is to be noted that the examples of Figures 6 to 12 can be arbitrarily combined, including e.g. cases of handover failure in a case of MT service request initiation, serving of cells by a single gNB in a case of MT service request initiation, handover pendency or failure in case of a single gNB, or the like. Also, S-NSSAI 1 and S-NSSAI 2 in the examples of Figures 6 to 9 can represent any (combination of) service requirements and/or service tenants, and more than two network slices can be involved and registered in any way.

By virtue of exemplifying embodiments of the present disclosure, as evident from the above, there are provided measures/mechanisms for proper handling of a service request with non-homogeneous network slice support in a registration area in/for a mobile communication system.

More specifically, exemplifying embodiments of the present disclosure enable more appropriate behavior for UE paging and/or UE idle-to-connected-mode transition, i.e. in/for either mobile originating (MO) service request initiation or mobile terminating (MT) service request initiation.

According to various exemplifying embodiments of the present disclosure, in/for either mobile originating (MO) service request initiation or mobile terminating (MT) service request initiation, a core network entity (such as e.g. AMF), when receiving a service request for a network slice (such as a NGAP Initial UE message carrying a NAS message such as e.g. NAS Paging Response), checks from which TA the service request (such as the NGAP Initial UE message carrying the NAS message such as e.g. NAS Paging Response) is received e.g. by checking a user location information element. If this TA does not support the network slice involved, the core network entity (such as e.g. AMF) provides a corresponding indication to a radio access network (e.g. NG-RAN) entity (such as e.g. gNB) associated with the TA, e.g. includes in a subsequent NGAP Initial Context Setup PDU session information for the non-supported network slice together with an indication that a handover should be triggered. Then, the core network entity (such as e.g. AMF) performs session and/or connection management depending on an indication regarding the required/requested handover from the radio access network (e.g. NG-RAN) entity (such as e.g. gNB). For example, if the core network entity (such as e.g. AMF) receives an indication in an Initial Context Setup Response that handover has been initiated, the core network entity (such as e.g. AMF) waits before contacting another core network entity (such as e.g. SMF) for setting up a corresponding session associated with the network slice involved. When the radio access network (e.g. NG-RAN) entity (such as e.g. gNB) receives a corresponding indication from the core network entity (such as e.g. AMF), e.g. included in a NGAP Initial Context Setup PDU, namely session information for the non-supported network slice together with an indication that a handover should be triggered, it should find/identify a suitable target cell for supporting the involved network slice and trigger the handover procedure. The radio access network (e.g. NG-RAN) entity (such as e.g. gNB) may indicate e.g. in a NGAP PDU Session setup response a status or result of the handover, e.g. that the handover has been initiated to request the core network entity (such as e.g. AMF) to wait to contact the another core network entity (such as e.g. SMF) for setting up a corresponding session associated with the network slice involved.

The above-described functionality as well as its related operations, procedures, methods and processes may be implemented by respective functional elements, entities, modules, units, processors, or the like, as described below. These functional elements, entities, modules, units, processors, or the like, i.e. the implementation of one or more exemplifying embodiments, may be realized in a cloud environment, by SDN, by NFV/NFVI, or the like.

While in the foregoing exemplifying embodiments of the present disclosure are described mainly with reference to operations, procedures, methods and processes, corresponding exemplifying embodiments of the present disclosure also cover respective apparatuses, entities, modules, units, network nodes and/or systems, including software and/or hardware thereof.

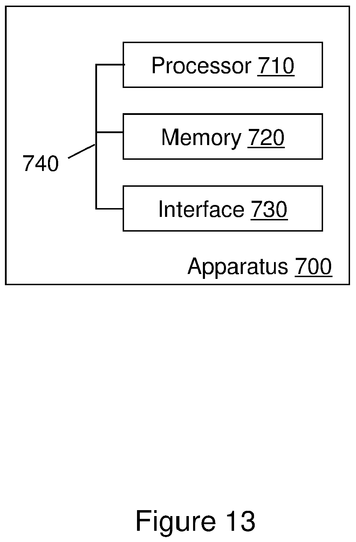

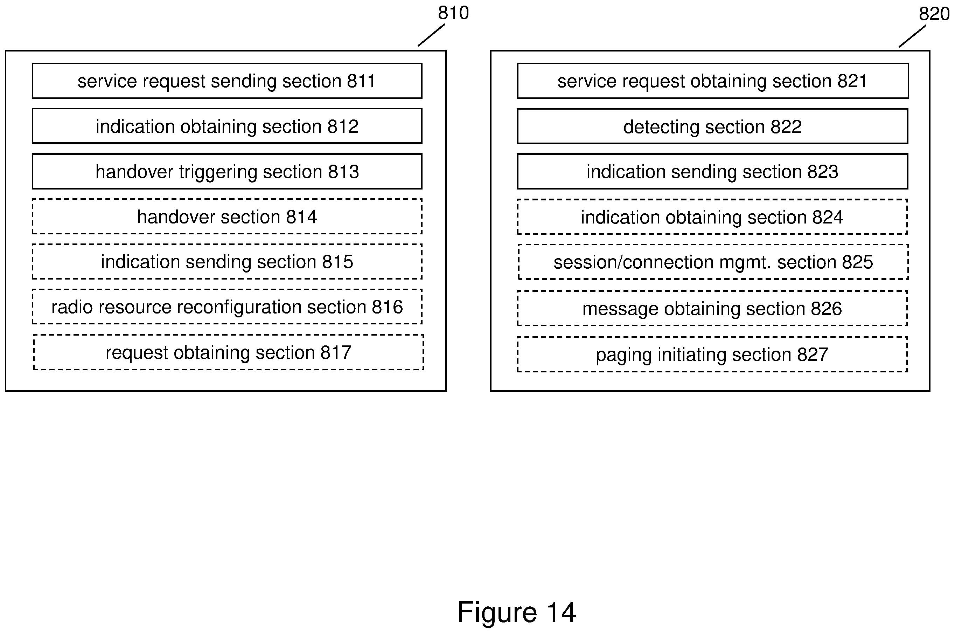

Respective exemplifying embodiments of the present invention are described below referring to Figures 13 and 14, while for the sake of brevity reference is made to the detailed description of respective corresponding configurations/setups, schemes, processes, sequences, methods as well as functionalities, principles and operations according to Figures 4 to 12.

In Figures 13 and 14, the blocks are basically configured to perform respective methods, procedures and/or functions as described above. The entirety of blocks are basically configured to perform the methods, procedures and/or functions as described above, respectively. With respect to Figures 13 and 14, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 13 and 14, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

Figure 13 shows a schematic diagram illustrating an example of a structure of apparatuses according to at least one example embodiment. Herein, an apparatus can represent a physical entity or component, e.g. a structural device implementing a specific network element, entity or function or the functionality thereof as such, or a functional or logical entity or component. For example, the illustrated apparatus may be realized in or by a server or the like in a cloud environment, e.g. by a cloud-based implementation.

As indicated in Figure 13, according to at least one example embodiment, an apparatus 700 may comprise or realize at least one processor 710 and at least one memory 720 (and possibly also at least one interface 730), which may be operationally connected or coupled, for example by a bus 740 or the like, respectively.

The processor 710 and/or the interface 730 of the apparatus 700 may also include a modem or the like to facilitate communication over a (hardwire or wireless) link, respectively. The interface 730 of the apparatus 700 may include a transmitter, receiver or transceiver connected or coupled to one or more antennas, antenna units, such as antenna arrays or communication facilities or means for (hardwire or wireless) communications with the linked, coupled or connected device(s), respectively. The interface 730 of the apparatus 700 is generally configured to communicate with at least one other apparatus, device, node or entity (in particular, the interface thereof).

The memory 720 of the apparatus 700 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with example embodiments described herein. Further, the memory 720 of the apparatus 700 may (comprise a database to) store any data, information, or the like, which is used in the operation of the apparatus.

According to various example embodiments, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the illustrated apparatus 700 can be used in practicing one or more of the example embodiments, as described herein.

When in the subsequent description it is stated that the processor (or some other means) is configured to perform some function, this is to be construed to be equivalent or corresponding to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one example embodiment, the illustrated apparatus 700 may represent or realize/embody a (part of a) communication control element or function or an element, function or entity of similar/comparable functionality or operability, in/for a mobile communication system, such as a gNB in a 3GPP network or system. Hence, the apparatus 700 may be configured to perform a procedure and/or exhibit a functionality and/or implement a mechanism, as described (for a gNB) in any one of Figures 4 and 6 to 12.

Accordingly, the apparatus 700 may be caused or the apparatus 700 or its at least one processor 710 (possibly together with computer program code stored in its at least one memory 720) may be configured to send (e.g. to an access and/or mobility management element or function) a service request of a user equipment (element or function) served in a serving cell of the communication control element or function, which is associated with a first tracking area not supporting all network slices allowed for the user equipment (element or function), said service request relating to at least one first network slice among the network slices allowed for the user equipment (element or function), said first network slice being not supported in the first tracking area, to obtain, e.g. from the access and/or mobility management element or function, an indication of transitionary acceptance of activation of a session associated with the first network slice on condition of handover for the session to a tracking area supporting the first network slice, and to trigger handover of the user equipment (element or function) to a target cell belonging to a second tracking area supporting the first network slice.

According to at least one example embodiment, the illustrated apparatus 700 may represent or realize/embody a (part of a) access and/or mobility management element or function or an element, function or entity of similar/comparable functionality or operability, in/for a mobile communication system, such as an AMF in a 3GPP network or system. Hence, the apparatus 700 may be configured to perform a procedure and/or exhibit a functionality and/or implement a mechanism, as described (for an AMF) in any one of Figures 5 to 12.

Accordingly, the apparatus 700 may be caused or the apparatus 700 or its at least one processor 710 (possibly together with computer program code stored in its at least one memory 720) may be configured to obtain, e.g. from a communication control element or function, a service request of a user equipment (element or function) served in a serving cell of the communication control element or function, which is associated with a first tracking area not supporting all network slices allowed for the user equipment (element or function), said service request relating to at least one first network slice among the network slices allowed for the user equipment (element or function), to detect that the communication control element or function is associated with the first tracking area in which the first network slice is not supported, and to send (e.g. to the communication control element or function) an indication of transitionary acceptance of activation of a session associated with the first network slice on condition of handover for the session to a tracking area supporting the first network slice, said indication requesting handover of the user equipment (element or function) to a target cell belonging to a second tracking area supporting the first network slice.

As mentioned above, an apparatus according to at least one example embodiment may be structured by comprising respective one or more units or means or circuitries for performing corresponding operations, procedures and/or functions. For example, such one or more units or means or circuitries may be implemented/realized on the basis of an apparatus structure, as illustrated in Figure 13, e.g. by one or more processors 710, one or more memories 720, one or more interfaces 730, or any combination thereof.

Figure 14 shows a schematic diagram illustrating an example of a structure of apparatuses according to at least one example embodiment.

As shown in Figure 14, an apparatus 810 according to at least one example embodiment may represent or realize/embody a (part of a) a communication control element or function or an element, function or entity of similar/comparable functionality or operability, in/for a mobile communication system, such as a gNB in a 3GPP network or system. Hence, the apparatus 810 may be configured to perform a procedure and/or exhibit a functionality and/or implement a mechanism, as described (for a gNB) in any one of Figures 4 and 6 to 12.

Such apparatus 810 may comprise (at least) one or more unit/means/circuitry, denoted by service request sending section 811, which represent any implementation for (or configured to) sending (send), e.g. to an access and/or mobility management element or function, a service request of a user equipment (element or function) served in a serving cell of the communication control element or function, which is associated with a first tracking area not supporting all network slices allowed for the user equipment (element or function), said service request relating to at least one first network slice among the network slices allowed for the user equipment (element or function), said first network slice being not supported in the first tracking area, one or more unit/means/circuitry, denoted by indication obtaining section 812, which represent any implementation for (or configured to) obtaining (obtain), e.g. from the access and/or mobility management element or function, an indication of transitionary acceptance of activation of a session associated with the first network slice on condition of handover for the session to a tracking area supporting the first network slice, and one or more unit/means/circuitry, denoted by handover triggering section 813, which represent any implementation for (or configured to) triggering (trigger) handover of the user equipment (element or function) to a target cell belonging to a second tracking area supporting the first network slice.

Further, such apparatus 810 may additionally/optionally further comprise one or more unit/means/circuitry, denoted by handover section 814, which represent any implementation for (or configured to) determining (determine) possibility of and/or performing the handover of the user equipment (element or function) from the serving cell to the target cell belonging to the second tracking area supporting the first network slice, and/or one or more unit/means/circuitry, denoted by indication sending section 815, which represent any implementation for (or configured to) sending (send), e.g. to the access and/or mobility management element or function, an indication of a status or result of the handover for the session. Also, such apparatus 810 may additionally/optionally further comprise one or more unit/means/circuitry, denoted by radio resource configuration section 816, which represent any implementation for (or configured to) initiating (initiate) radio resource reconfiguration at the user equipment (element or function). Also, such apparatus 810 may additionally/optionally further comprise one or more unit/means/circuitry, denoted by request obtaining section 817, which represent any implementation for (or configured to) obtaining (obtain), e.g. from the user equipment (element or function), a radio resource connection establishment request including an initial service request, wherein the initial service request may be based on a mobile originating service request initiation or a mobile terminating service request initiation.

As shown in Figure 14, an apparatus 820 according to at least one example embodiment may represent or realize/embody a (part of a) access and/or mobility management element or function or an element, function or entity of similar/comparable functionality or operability, in/for a mobile communication system, such as an AMF in a 3GPP network or system. Hence, the apparatus 820 may be configured to perform a procedure and/or exhibit a functionality and/or implement a mechanism, as described (for an AMF) in any one of Figures 5 to 12.

Such apparatus 820 may comprise (at least) one or more unit/means/circuitry, denoted by service request obtaining section 821, which represent any implementation for (or configured to) obtaining (obtain), e.g. from a communication control element or function, a service request of a user equipment (element or function) served in a serving cell of the communication control element or function, which is associated with a first tracking area not supporting all network slices allowed for the user equipment (element or function), said service request relating to at least one first network slice among the network slices allowed for the user equipment (element or function), one or more unit/means/circuitry, denoted by detecting section 822, which represent any implementation for (or configured to) detecting (detect) that the communication control element or function is associated with the first tracking area in which the first network slice is not supported, and one or more unit/means/circuitry, denoted by indication sending section 823, which represent any implementation for (or configured to) sending (send), e.g. to the communication control element or function, an indication of transitionary acceptance of activation of a session associated with the first network slice on condition of handover for the session to a tracking area supporting the first network slice, said indication requesting handover of the user equipment (element or function) to a target cell belonging to a second tracking area supporting the first network slice.

Further, such apparatus 820 may additionally/optionally further comprise one or more unit/means/circuitry, denoted by indication obtaining section 824, which represent any implementation for (or configured to) obtaining (obtain), e.g. from the communication control element or function, an indication of a status or result of the handover for the session, and/or one or more unit/means/circuitry, denoted by session/connection management section 825, which represent any implementation for (or configured to) handling (handle) handling session and/or connection management based on an indication of the status or result of the handover for the session. Also, such apparatus 820 may additionally/optionally further comprise one or more unit/means/circuitry, denoted by message obtaining section 826, which represent any implementation for (or configured to) obtaining (obtain), e.g. from a session management element or function, a message of mobile terminating data the relating to the first network slice for the user equipment (element or function), and/or one or more unit/means/circuitry, denoted by paging initiating section 827, which represent any implementation for (or configured to) initiating (initiate) paging of the user equipment (element or function).

For further details regarding the operability/functionality of the apparatuses (or units/means thereof) according to exemplifying embodiments, reference is made to the above description in connection with any one of Figures 4 to 12, respectively.

According to exemplifying embodiments of the present disclosure, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to exemplifying embodiments of the present disclosure, a system may comprise any conceivable combination of any depicted or described apparatuses and other network elements or functional entities, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of exemplifying embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in/for a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of exemplifying embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea of the present disclosure. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling/realizing proper handling of a service request with non-homogeneous network slice support in a registration area in/for a mobile communication system. When a user equipment is served in a serving cell which is associated with a first tracking area not supporting all network slices allowed for the user equipment, a communication control entity can send, to an access and/or mobility management entity, a service request relating to at least one first network slice among the network slices allowed for the user equipment, which is not supported in the first tracking area, the access and/or mobility management entity can detect that the communication control entity is associated with the first tracking area in which the first network slice is not supported, and send, to the communication control entity, an indication of transitionary acceptance of activation of a session associated with the first network slice on condition of handover for the session to a tracking area supporting the first network slice, and the communication control entity can trigger handover of the user equipment element or function to a target cell belonging to a second tracking area supporting the first network slice.

Even though the present disclosure is described above with reference to the examples according to the accompanying drawings, it is to be understood that the present disclosure is not restricted thereto. Rather, it is apparent to those skilled in the art that the present disclosure can be modified in many ways without departing from the scope of the inventive idea as disclosed herein.

### List of acronyms and abbreviations

- 3GPP: 3rd Generation Partnership Project
- 5G: 5^{th} Generation
- ACK: Acknowledgment
- AMF: Access and Mobility Management Function
- DL: Downlink
- DRB: Data Radio Bearer
- eMBB: enhanced Mobile Broadband
- gNB: gNodeB (5G/NR base station)
- HO: Handover
- MO: Mobile originated/originating
- MT: Mobile terminated/terminating
- NAS: Non-Access Stratum
- NFV: Network Functions Virtualisation
- NFVI: Network Functions Virtualisation Infrastructure
- NG-RAN: Next Generation Radio Access Network
- NGAP: Next Generation Application Protocol
- NR: New Radio
- NSMF: Network Slice Management Function
- PDU: Packet Data Unit
- RA: Registration Area
- RAN: Radio Access Network
- RRC: Radio Resource Control
- SDN: Software-Defined Networking
- SMF: Session Management Function
- (S-)NSSAI: (Single) Network Slice Selection Assistance Information
- SRB: Signaling Radio Bearer
- TA: Tracking Area
- UE: User Equipment
- TAI: Tracking Area Identity/Identifier
- UPF: User Plane Function
- URLLC: Ultra-Reliable Low Latency Communication

## Claims

1. An apparatus of a communication control element or function for a mobile communication system, comprising:
means for sending, to an access and/or mobility management element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, said first network slice being not supported in the first tracking area,
means for obtaining, from the access and/or mobility management element or function, an indication of transitionary acceptance of activation of a session associated with the first network slice on condition of handover for the session to a tracking area supporting the first network slice, and
means for triggering handover of the user equipment element or function to a target cell belonging to a second tracking area supporting the first network slice.

2. The apparatus according to claim 1, further comprising:
means for determining possibility of and/or performing the handover of the user equipment element or function from the serving cell to the target cell belonging to the second tracking area supporting the first network slice, and
means for sending, to the access and/or mobility management element or function, an indication of a status or result of the handover for the session.

3. The apparatus according to claim 2, wherein the status or result of the handover for the session is indicated to be either one of:
pendency of the handover when the handover is not completed,
failure of the handover when the handover has failed or is determined to be not feasible, or
success of the handover when the handover has succeeded.

4. The apparatus according to claim 2 or 3, wherein the determining means is configured to:
identify a suitable neighboring cell, which is a cell controlled by the communication control element or function or another communication control element or function, as the target cell for the handover of the user equipment element or function.

5. The apparatus according to any one of claims 1 to 4, further comprising:
means for initiating radio resource reconfiguration at the user equipment element or function.

6. The apparatus according to claim 5, wherein
the radio resource reconfiguration comprises establishing at least one data radio bearer and/or at least one signaling radio bearer for the first network slice, and/or
the initiating means is configured to indicate, to the user equipment element or function, at least one data radio bearer to be unusable for the first network slice or conditionally usable for the first network slice subject to the handover to the target cell.

7. An apparatus of an access and/or mobility management element or function for a mobile communication system, comprising:
means for obtaining, from a communication control element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function,
means for detecting that the communication control element or function is associated with the first tracking area in which the first network slice is not supported, and
means for sending, to the communication control element or function, an indication of transitionary acceptance of activation of a session associated with the first network slice on condition of handover for the session to a tracking area supporting the first network slice, said indication requesting handover of the user equipment element or function to a target cell belonging to a second tracking area supporting the first network slice.

8. The apparatus according to claim 7, further comprising:
means for obtaining, from the communication control element or function, an indication of a status or result of the handover for the session, and
means for handling session and/or connection management based on the indication of the status or result of the handover for the session.

9. The apparatus according to claim 8, wherein, when the status or result of the handover for the session is indicated to be pendency of the handover, the handling of the session and/or connection management comprises:
delaying initiation of setup of the session associated with the first network slice until obtaining a path switch request, indicating the handover of the user equipment element or function to be succeeded, from the target cell and/or another communication control element or function controlling the target cell.

10. The apparatus according to claim 8, wherein, when the status or result of the handover for the session is indicated to be pendency of the handover, and the indication of the status or result of the handover for the session comprises an identification of the target cell and/or another communication control element or function controlling the target cell, the handling of the session and/or connection management comprises:
causing initiation of setup of the session associated with the first network slice.

11. The apparatus according to claim 8, wherein, when the status or result of the handover for the session is indicated to be failure of the handover, the handling of the session and/or connection management comprises:
aborting setup of the session associated with the first network slice and/or deactivating the session associated with the first network slice and/or releasing a connection relating to the session associated with the first network slice.

12. The apparatus according to claim 8, wherein, when the status or result of the handover for the session is indicated to be success of the handover, the handling of the session and/or connection management comprises:
causing initiation of setup of the session associated with the first network slice.

13. The apparatus according to any one of claims 8 to 12, wherein, when the service request is also relating to a second network slice among the network slices allowed for the user equipment element or function, which is supported in the tracking area with which the communication control element or function is associated, the handling of the session and/or connection management comprises:
causing initiation of setup of a session associated with the second specific network slice.

14. The apparatus according to any one of claims 7 to 13, wherein, when the service request is based on a mobile terminating service request initiation, the apparatus further comprises:
means for obtaining, from a session management element or function, a message of mobile terminating data the relating to the first network slice for the user equipment element or function, and
means for initiating paging of the user equipment element or function.

15. A method of a communication control element or function for a mobile communication system, comprising:
sending, to an access and/or mobility management element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function, said first network slice being not supported in the first tracking area,
obtaining, from the access and/or mobility management element or function, an indication of transitionary acceptance of activation of a session associated with the first network slice on condition of handover for the session to a tracking area supporting the first network slice, and
triggering handover of the user equipment element or function to a target cell belonging to a second tracking area supporting the first network slice.

16. A method of an access and/or mobility management element or function for a mobile communication system, comprising:
obtaining, from a communication control element or function, a service request of a user equipment element or function served in a serving cell of the communication control element or function, which is associated with a first tracking area not supporting all network slices allowed for the user equipment element or function, said service request relating to at least one first network slice among the network slices allowed for the user equipment element or function,
detecting that the communication control element or function is associated with the first tracking area in which the first network slice is not supported, and
sending, to the communication control element or function, an indication of transitionary acceptance of activation of a session associated with the first network slice on condition of handover for the session to a tracking area supporting the first network slice, said indication requesting handover of the user equipment element or function to a target cell belonging to a second tracking area supporting the first network slice.

17. A computer program product comprising computer program code which, when the computer program code is executed on a computer, is configured to cause the computer to carry out the method according to any one of claims 15 or 16.
